# EUROPEAN PATENT APPLICATION

(11) **EP 1 829 591 A1**
(43) Date of publication of application: **05.09.2007**
(21) Application number: 05811409.1
(22) Date of filing: 01.12.2005
(51) Int. Cl.: A63F 13/10, A63F 13/00, A63F 13/12

(54) **GAME PROGRESS ADMINISTRATION METHOD AND ITS SYSTEM**

(30) Priority: 10.12.2004 JP 2004358994; 10.12.2004 JP 2004359004
(71) Applicant: Konami Digital Entertainment Co., Ltd., Minato-ku Tokyo 107-8324 (JP)
(72) Inventor: KUBOTA, Kazutaka,, Minato-ku, Tokyo 107-8324 (JP); NAGATOMO, Yasuyuki,, Minato-ku, Tokyo 107-8324 (JP); KONISHI, Kazuma,, Minato-ku, Tokyo 107-8324 (JP); SHIBAMIYA, Masakazu,, Minato-ku, Tokyo 107-8324 (JP); AKASHI, Shigeto,, Minato-ku, Tokyo 107-8324 (JP); HARANO, Yuuki,, Minato-ku, Tokyo 107-8324 (JP)
(74) Representative: Müller-Boré & Partner Patentanwälte
(86) International application number: PCT/JP2005/022054
(87) International publication number: WO 2006/062022

(57) **Abstract**

A game system according to the present invention is provided with a CPU 361 including a winner determining section 361c for determining a winner advancing to the second round every time a competition game of each combination constituting the first round finishes, a combination determining section 361d for fitting the winner determined by the winner determining section 361c in a selected combination of a competition game constituting the second round, and a competition starting section 361e for instructing the start of the combination game of the second round to client terminal units 1 included in the selected combination ST if the selected combination is filled up with the competitors as a result of the additional winner fitted in the selected combination. In this way, the combinations of the next rounds can be determined in a tournament game.

## Description

### FIELD OF TECHNOLOGY

The present invention relates to a game progress administration method according to which game terminal units to be operated by players and adapted to display game screens are so connected via communication lines as to be able to communicate operation signals necessary for the progress of a game, and the progress of a tournament game comprised of a plurality of rounds in each of which a specified number of combinations of competition games are set, the respective competition games in at least one round having indefinite competition times, are administered, and also to a system implementing such a method.

### BACKGROUND TECHNOLOGY

Various video game systems playable among a plurality of players have been conventionally proposed or already used. There is also known a video game system in which a plurality of video game apparatuses (game terminal units) of the same type are installed for arcade games and connected via a network (and a server) such as a LAN or Internet, so that a plurality of players can play a game in the same game space. In such a video game system, table games such as mahjong and shogi (Japanese chess) and competing-type games such as sports and martial arts (hereinafter, table games and fighting-type games are collectively called competition games) are played.

In the case of playing the above competition game, an unspecified number of players can participate in the competition game since a plurality of video game apparatuses are connected via the network (and the server) such as the LAN or Internet. In the case where strangers compete with each other in this way, since abilities of the competitors concerning the competition game cannot be known, the competition game can become unpredictable and interesting in a specific manner as compared to ordinary competition games played using stand-alone video game apparatuses as competitors.

For example, there is a disclosure in which suitable competitors are selected based on strength and the like in a competition game simulating mahjong (patent literature 1). Competition games can be made more interesting by selecting suitable competitors.

On the other hand, by playing the competition games in a tournament comprised of a plurality of rounds, players can compete with more competitors, thereby being more interested in the game and having his gambling spirit urged upon continuing to win in the rounds. There are also games, which simulate games of *go, shogi,* mahjong and the like and for which no definite periods cannot be determined as competition times by their natures, i.e. in which competitions end upon reaching a specified result (state of game) (hereinafter, "game having an indefinite competition time" is referred to as "time-limit free competition game").

In the case of playing such time-limit free competition games (e.g. mahjong games simulating mahjong) in a tournament, there is a problem that, even if competitions in the first round of the tournament are started at the same time, competition ending times differ depending on the combinations of players constituting the tournament (competition times differ). Further, different competition times result in waiting times until the start of the next round, thereby creating a problem of making the game less interesting.

In view of the above problems, an object of the present invention is to provide a game progress administration method according to which combinations of a next round can be set even upon the occurrence of waiting times in a time-limit free competition game tournament comprised of a plurality of rounds in massively multiplayer online playing games, and a system implementing such a method.

Another object of the present invention is to provide a game progress administration method according to which a decrease in the interest in games can be suppressed even upon the occurrence of waiting times or the occurrence of waiting times can be suppressed in a time-limit free competition game tournament comprised of a plurality of rounds in massively multiplayer online playing games, and a system implementing such a method.

### Patent Literature 1:

Japanese Unexamined Patent Publication No. 2003-225469

### DISCLOSURE OF THE INVENTION

In order to accomplish the above object, the present invention is directed to a game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in the first round, the system comprising winner determining means for determining a winner advancing to the next round based on a game result of the competition game of each combination every time the competition game of each combination constituting the one round finishes; combination determining means for fitting the winner determined by the winner determining means in one combination of the competition game constituting the next round; and competition starting means for instructing the start of the competition game of the next round to the game terminal units included in the combination if the one combination is filled up with the competitors as a result of the additional winner fitted in the one combination.

By the construction as above, the winner advancing to the next round is determined based on the game result of the competition game of each combination by the winner determining means every time ending the competition game of each combination constituting the one round in which the competition times of the respective competition games are indefinite. The winner determined by the winner determining means is fitted in one combination of the competition game constituting the next round by the combination determining means. The start of the competition game of the next round is instructed to the game terminal units included in the combination by the competition starting means if the one combination is filled up with the competitors as a result of the additional winner fitted in the one combination.

The administration system preferably further comprises watch means for causing a game screen of an ongoing competition game constituting the one round to be displayed on a competition waiting terminal unit, which is a game terminal unit included in the one combination, until the one combination is filled up with the competitors after the winner is fitted in the one combination.

With this arrangement, the watch means causes the game screen of the ongoing competition game constituting the one round to be displayed on the competition waiting terminal unit, which is the game terminal unit included in the one combination, until this combination is filled up with the competitors after the winner is fitted in this combination. Accordingly, the game terminal unit (competition waiting terminal unit) enters a standby state for the next round until the one combination is filled up with the competitors after the winner is fitted in the one combination by the combination determining means. However, since the game screen of the ongoing competition game is displayed on this game terminal unit, the player playing this game terminal unit can watch the game, thereby suppressing a drop in the interest caused by the occurrence of the competition standby state.

Preferably, the combination determining means preferentially fits the winner determined by the winner determining means in one combination, in which at least one winner is already fitted, out of the combinations constituting the next round.

With this arrangement, the combination determining means preferentially fits the winner determined by the winner determining means in the one combination, in which at least one winner is already fitted, out of the combinations constituting the next round. Accordingly, the winner determined by the winner determining means is preferentially fitted in the combination, in which at least one winner is already fitted, out of the combinations constituting the next round. Thus, the combination can be efficiently filled up with the competitors, thereby suppressing the occurrence of waiting times until the start of the next round.

### BRIEF DESCRIPTION OF THE DRAWINGS

FIG. 1 is a construction diagram of a game system to which a game progress administration system of the invention is applied,
FIG. 2 is a perspective view showing the external appearance of one embodiment of a client terminal unit,
FIG. 3 is a hardware construction diagram showing one embodiment of the client terminal unit,
FIG. 4 is a functional construction diagram showing one example of a control unit of the client terminal unit,
FIGS. 5 are tables showing one example of assigning conditions for ranks representing strength levels of players in this game and given by a rank determining section,
FIG. 6 is a table showing one example of tile discarding times TA set for the respective ranks and stored in a discarding-time storage,
FIG. 7 is a construction diagram showing one example of the game system,
FIGS. 8 are diagram showing examples of contents of processing by a progress status updating section,
FIG. 9 is a hardware construction diagram showing one example of a central server,
FIG. 10 is a functional construction diagram showing one example of a control unit of the central server,
FIG. 11 is a diagram showing one example of a rule for fitting participating terminal units in combinations of a tournament by a combination determining section,
FIG. 12 is a flow chart showing one example of processes carried out by the client terminal unit (first half),
FIG. 13 is a flow chart showing one example of processes carried out by the client terminal unit (second half),
FIG. 14 is a detailed flow chart showing one example of a process of administering the tile discarding time TA in a competition process carried out in Step S109 of the flow chart shown in FIG. 12,
FIG. 15 is a flow chart showing one example of processes carried out by the central server (first half),
FIG. 16 is a flow chart showing one example of processes carried out by the central server (second half),
FIG. 17 is a detailed flow chart showing one example of a game watching process carried out in Step S331 shown in FIG. 15 and Step S345 shown in FIG. 16,
FIG. 18 is a diagram showing one example of a progress status displaying screen displayed on a monitor of the client terminal unit in Step S121 of the flow chart shown in FIG. 12,
FIG. 19 is a diagram showing another example of the progress status displaying screen displayed on the monitor of the client terminal unit in Step S121 of the flow chart shown in FIG. 12,
FIG. 20 is a diagram showing still another example of the progress status displaying screen displayed on the monitor of the client terminal unit in Step S121 of the flow chart shown in FIG. 12,
FIG. 21 is a diagram showing one example of a game watch screen displayed on the monitor of the client terminal unit in Step S133 of the flow chart shown in FIG. 13,
FIG. 22 is a diagram showing another example of the game watch screen displayed on the monitor of the client terminal unit in Step S133 of the flow chart shown in FIG. 13, and
FIG. 23 is a diagram showing another mode of the progress status displaying screen displayed on the monitor of the client terminal unit in Step S121 of the flow chart of FIG. 12.

### BEST MODES FOR EMBODYING THE INVENTION

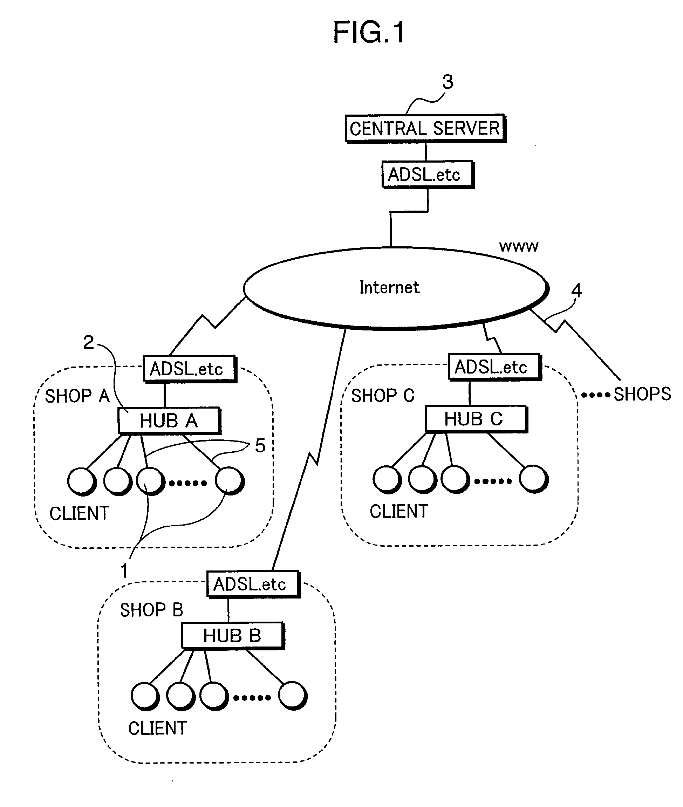

FIG. 1 is a construction diagram of a game system to which a game progress administration system of the present invention is applied. The game system is provided with client terminal units (corresponding to a part of the game progress administration system and game terminal units) 1 assigned with corresponding identification information, a plurality of hubs (HUBs) 2 each communicably connected with a plurality of (eight in this example) client terminal units 1 via special lines 5, and a central server 3 (corresponding to the game progress administration system) communicably connected with a plurality of client terminal units 1 via the hubs 2, communication lines 4 and a network such as WWW network to administer games played by a plurality of players using the client terminal units 1.

Each client terminal unit 1 receives specified operations a player carries out while referring to a game screen displayed on a monitor, and proceeds with a game in accordance with instruction information transmitted from the central server 3, operation signals from the other client terminal units 1 and the like.

The identification information assigned in correspondence with each client terminal unit 1 includes identification information of a shop where this client terminal unit 1 is installed, and identification information (referred to as a "terminal number") of this client terminal unit 1 in the shop where this client terminal unit 1 is installed. For example, if the identification information of the client terminal unit 1 in a shop A is "4", the identification information of this client terminal unit 1 is "a4".

Each hub 2 is communicably connected with a plurality of (eight in this example) client terminal units 1 and the central server 3, and transmits and receives data to and from the client terminal units 1 and the central server 3. The hub 2 is installed in each shop and the identification information of the hub 2 installed in the shop A is hub A.

The central server 3 is so connected with the client terminal units 1 to be operated by players via the communication lines 4 (and the hubs 2) as to be able to communicate operation signals necessary for the progress of the game, and administers the progresses of competition games of a tournament comprised of a plurality of rounds (three rounds in this example).

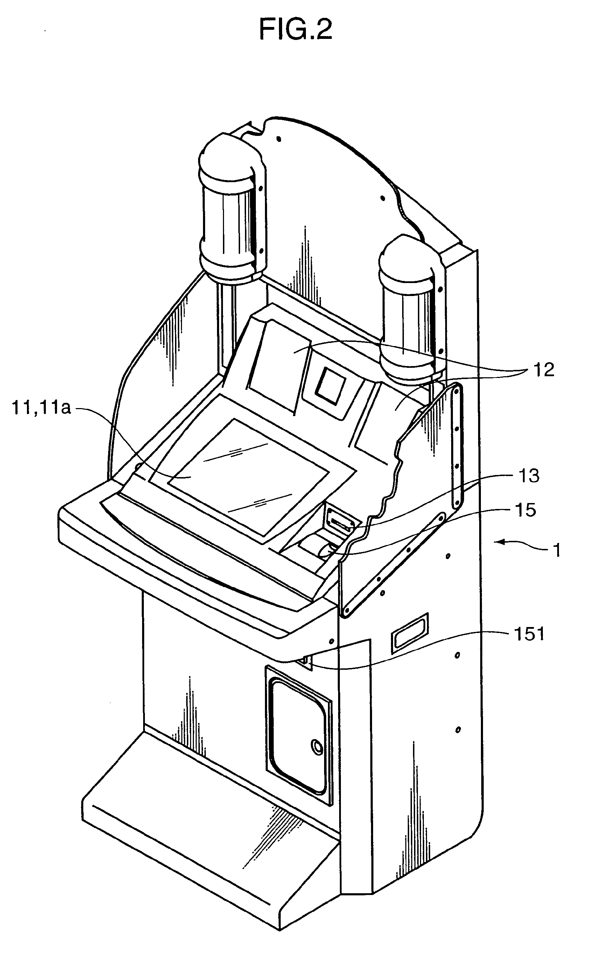

FIG. 2 is a perspective view showing the external appearance of one embodiment of the client terminal unit 1. Although a video game apparatus for business use integrally constructed with a monitor is described as one example of the client terminal unit in the following description, the present invention is not particularly limited to this example and is similarly applicable to video game apparatuses for home use constructed by connecting video game machines for home use with home televisions, personal computers that function as video game apparatuses by executing a video game program, etc.

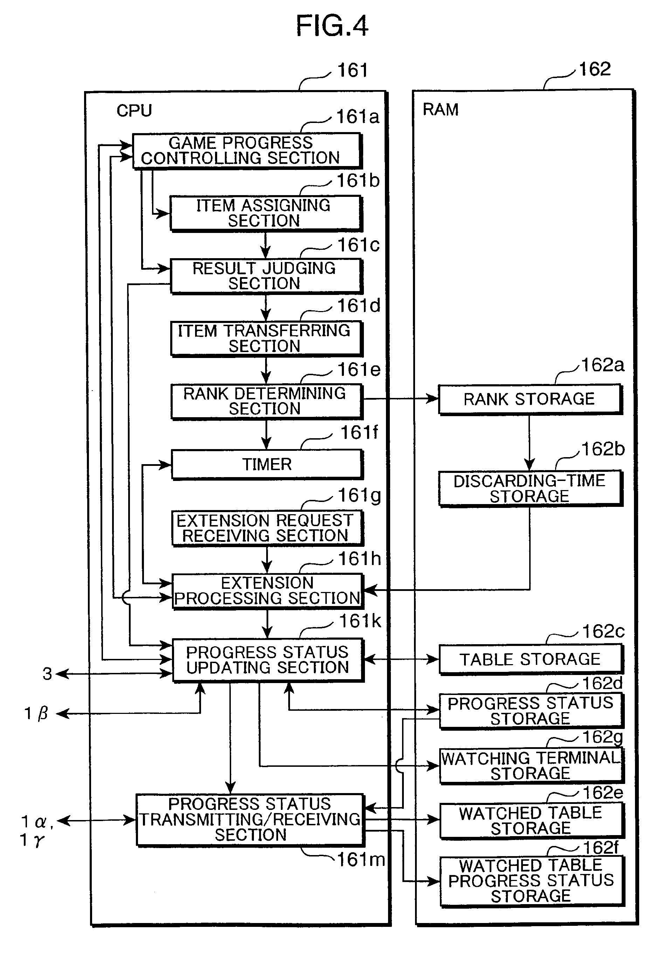

In this embodiment, competition games played using the client terminal units 1 according to the present invention are mahjong games simulating a mahjong tournament comprised of a plurality of rounds (three rounds in this example) having competition games of a specified number of combinations set, wherein the player operating each client terminal unit 1 competes with those operating the other client terminal units 1 or CPU player(s). It should be noted that each competition game in the first round to the third round (final round) is an east round (four positions with east as a prevailing wind) without time limit. In the case of competing with the players operating the other client terminal units 1, data are transmitted and received between the client terminal units 1 via the hubs 2, the central server 3, etc. and information on game progress statuses are saved in the client terminal units 1 (in progress status storages 162d to be described later with reference to FIG. 4).

Here, the game played using the client terminal units 1 according to the present invention are described in detail. The games are mahjong games simulating a mahjong tournament comprised of the first round having four combinations by sixteen competitors (client terminal units 1 whose participation was received or CPU players), the second round having two combinations by the winners (eight competitors) of the first round, and the third round (final round) having one combination by the winners (four competitors) of the second round. One combination is comprised of four competitors, out of which the top twos (competitors in the first and second places) advance to the next round.

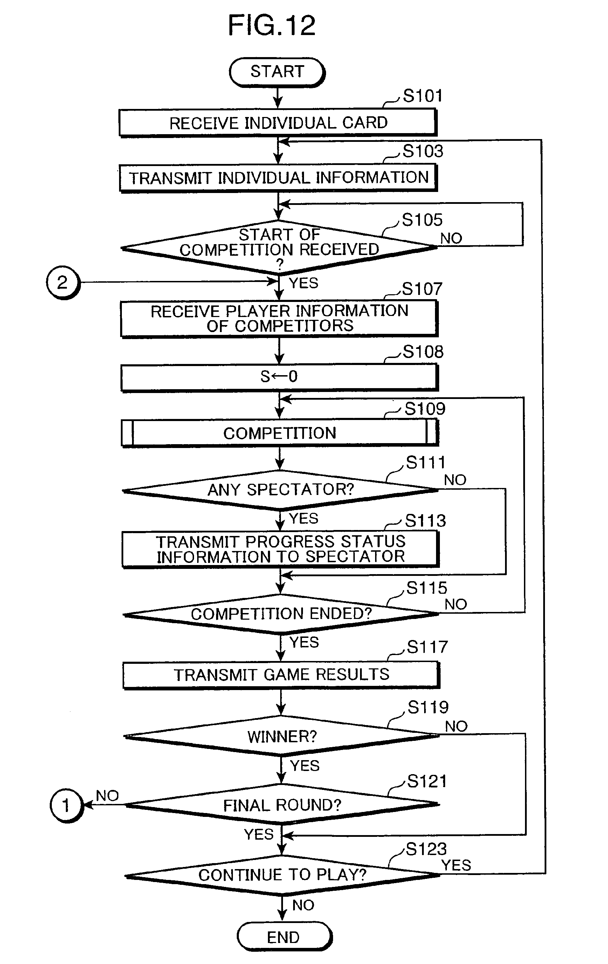

The competition game in each round is an east round (four positions with east as a prevailing wind) and has no limit in the competition time. In other words, despite an elapsed time (= competition time) from the starting time of the competition, the competition game is judged to be ended when the east round comprised of four winds with east as a prevailing wind is ended, and scores as game results (points of virtual chips of the respective competitors) are transmitted from the client terminal units 1 to the central server 3 (see Step S117 of FIG. 12).

Each client terminal unit 1 is provided with a monitor 11 for displaying game screens, a touch panel 11a for judging which button has been pressed to instruct based on an address of a button displayed on a game screen of the monitor 11 to urge the selection or the like and a position pressed by the player, a loudspeaker 12 for outputting sounds, a card reader 13 for reading information such as a user ID and the like stored in an individual card, and a coin receiving device 15 for receiving coins inserted by the player.

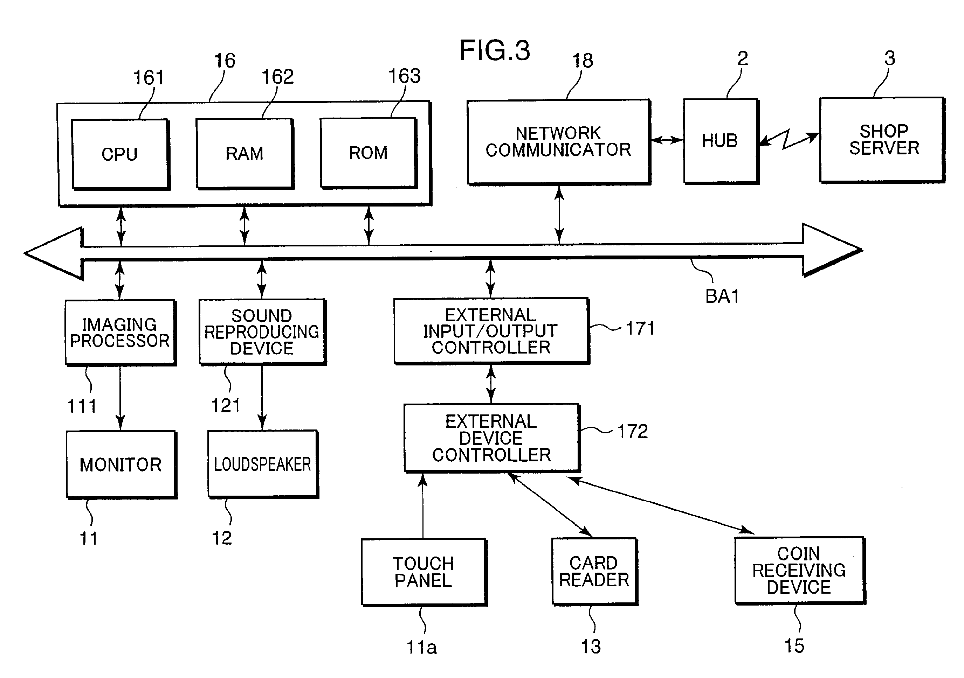

The monitor 11 is, for example, a thin liquid crystal display for displaying images. The loudspeaker 12 is for outputting specified messages and BGMs. The coin receiving device 15 is provided with a coin outlet 151 to which the coin is discharged in the case where the inserted coin is a defective coin or the like. The individual card is a magnetic card, an IC card or the like in which the individual information such as the user ID is stored. Although not shown, the card reader 13 is for enabling the readout of the individual information from the inserted individual card. A control unit 16 (see FIG. 3) including a microcomputer for receiving detection signals from the respective devices and outputting control signals to the respective devices is provided at a specified position of the client terminal unit 1.

FIG. 3 is a hardware construction diagram showing one embodiment of the client terminal unit 1. The control unit 16 is for controlling the overall operation of the client terminal unit 1, and includes an information processor (CPU) 161, a RAM 162 for temporarily saving information and the like obtained during processes, and a ROM 163 storing specified image information, a game program and the like to be described later.

An external input/output controller 171 converts the detection signals into digital signals to be used for the processes between the control unit 16 and detectors including the card reader 13, the touch panel 11a and the coin receiving device 15, and outputs command information to the respective detectors after converting it into control signals. Such signal processing and input/output processing are carried out, for example, in a time-sharing manner. An external device controller 172 outputs the control signals to the respective detectors and receives the detection signals from the respective detectors within the respective time-sharing periods.

An imaging processor 111 is for causing the monitor 11 to display a desired image in accordance with an image displaying instruction from the control unit 16 and includes a video RAM and the like. A sound reproducing device 121 is for outputting a specified message, a BGM or the like to the loudspeaker 12 in accordance with an instruction from the control unit 16.

The touch panel 11a is a rectangular thin layer element and constructed by covering an array of linear pressure-sensitive elements made of a transparent material and vertically and horizontally arranged at specified intervals by a transparent cover, and is attached to a display screen of the monitor 11. A known touch panel can be used as the touch panel 11a. The touch panel 11a is capable of judging which button has been pressed to instruct based on the address of the button urging the selection or the like displayed on the screen of the monitor 11 and the pressed position.

Mahjong tile objects, background images, various screen images and the like are stored in the ROM 163. Each of the mahjong tile objects and the like is comprised of a necessary number of polygons so as to enable the three-dimensional imaging. The imaging processor 111 performs a calculation for the conversion from positions in a three-dimensional space to those in a simulated three-dimensional space, a light source calculation and other calculations in accordance with an imaging instruction from the CPU 161, and writes an image data to be imaged in the video RAM, for example, writes (adheres) texture data in (to) an area of the video RAM designated by polygons based on the calculation results.

Here, a relationship between the operation of the CPU 161 and that of the imaging processor 111 is described. The CPU 161 reads image data, sound data, control program data and game program data from the ROM 163 in accordance with an operating system (OS) stored in the ROM 163 which is built in or detachably mountable from the outside. Some or all of the read image data, sound data, control program data, etc. are saved in the RAM 162. Thereafter, the CPU 161 performs processes in accordance with the control program and various data (image data including polygons and textures of objects to be displayed and other character images, and sound data) saved in the RAM 162 and the detection signals and the like from the detectors.

Out of various data stored in the ROM 163, those that can be stored in a detachable storage medium may be made readable by a driver such as a hard disk drive, an optical disk drive, a flexible disk drive, a silicon disk drive, or a cassette medium reader. In such a case, the recording medium is, for example, a hard disk, an optical disk, a flexible disk, a CD, a DVD or a semiconductor memory.

The network communicator 18 is for transmitting and receiving various pieces of event information occurring during the execution of the mahjong game to and from the central server 3 via the network, the shop server 2, etc.

Here, one example of an individual authentication method in each client terminal unit 1 is described. The individual authentication is for authenticating that an actual player is identical with a player recognized by the client terminal unit 1 (or central server 3 connected via the network communicator 18 and the network). In the case where a player plays using the client terminal unit 1 for the first time, user ID data (identification information) is read from an inserted individual card by the card reader 13. Then, the user ID data is transmitted to the shop server 2 connected via the network communicator 18 and the network and further transmitted from the shop server 2 to the central server 3 via the communication line to be stored in a player information storage 362a to be described later. In this way, the player is registered in the central server 3.

In the case where a player already registered in the central server 3 plays using the client terminal unit 1, user ID data is read from an inserted individual card by the card reader 13. Then, the user ID data is transmitted to the central server 3 connected via the network communicator 18, the network, the shop server 2 and the like, and the central server 3 judges as to whether or not the user ID is identical with any of user IDs stored in the player information storage 362a to be described later. The player is permitted to play if the judgment result is affirmative while being refused to play if the judgment result is negative (for example, an error message is displayed on the monitor 11 of the client terminal unit 1 to urge the player to conduct the registration again).

FIG. 4 is one example of a functional construction diagram showing the control unit 16 of the client terminal unit 1. The CPU 161 of the control unit 16 is provided with a game progress controlling section 161a for receiving an operation from the player and controlling the progress of the game in accordance with an instruction from the central server 3 and the mahjong rules, an item assigning section 161b for virtually assigning a specified number of items to the player satisfying specific conditions, a result judging section 161c for judging the ranking of the player in the game every time the game is ended, an item transferring section 161d for transferring a specified number of items virtually possessed by one player to other players based on the judgment result of the result judging section 161c, a rank determining section 161e for determining a rank representing the level of the player's strength in the game based on the number of the items the player virtually possesses, a timer 161f for measuring time, an extension request receiving section 161g for receiving an operation of requiring the extension of a tile discarding time to be described later from the player, and an extension processing section 161g for processing the extension of the tile discarding time.

The CPU 161 of the control unit 16 is also provided with a progress status updating section 161k for updating information on the progress status of the game stored in the progress status storage 162d to be described later, and a progress status transmitting/receiving section 161m for transmitting and receiving information on the progress status of the game to and from the other client terminal units 1.

The RAM 162 of the control unit 16 is further provided with a rank storage 162a for storing the number of items and the rank in correspondence with the identification information of the player, a discarding-time storage 162b for storing a tile discarding time TA to be described later for each rank, a table storage 162c for storing table information as information on a mahjong table where the client terminal unit 1 is virtually playing mahjong, the progress status storage 162d for storing information on the progress status of the game on the mahjong table where the client terminal unit 1 is virtually playing mahjong, a watched table storage 162e for storing table information as information on a mahjong table the client terminal unit 1 is virtually watching, a watched table progress status storage 162f for storing information on the progress status of the game on the mahjong table the client terminal unit 1 is virtually watching, and a watching terminal storage 162g for storing the identification information of the client terminal unit 1 corresponding to a spectator virtually watching the mahjong table where the client terminal unit 1 is competing.

The game progress controlling section 161a is for receiving an operation from the player by means of the touch panel 11a and the like and controlling the progress of the game in accordance with instructions from the central server 3 and the mahjong rules. The game progress controlling section 161a also forces the draw of a tile upon the lapse of the tile discarding time TA which is a time limit from the draw of one tile to the discard of one tile measured by the timer 161f.

The item assigning section 161b virtually assigns items (here, items called "dragon chips") to the player satisfying the specified conditions, increases or decreases points the player virtually possesses, and stores the item number and the points in the rank storage 162a in correspondence with the identification information of the player. It should be noted that the points the player virtually possesses also one kind of items similar to the dragon chips.

Here, a method for increasing and decreasing the points and the item assigning conditions are specifically described. A specified number of points are added to the points the player virtually possesses when the player completed a winning hand during the game, whereas a specified number of points are subtracted when the player discarded a tile to let the other player complete a winning hand. For example, if the player completed a winning hand, points are added at a ratio of 20 points to 1000 marks that have been won. If the player discarded the tile to let the other player complete a winning hand, points are subtracted at a ratio of 20 points to 1000 marks that have been lost. If the points reach 1000 or more, three items called dragon chips are virtually given.

The result judging section 161c judges the ranking in the descending order of the marks the players virtually possess in the form of chips when the game is ended. At the start of the game, all the players virtually possess the same marks (initial marks) in the form of chips. The initial marks are, for example, 20000 marks.

The item transferring section 161d is for transferring specified numbers of items among the players out of those virtually possessed by the players based on the judgment result of the result judging section 161c after the ranking was judged by the result judging section 161c. Specifically, one dragon chip is transferred from the player of the fourth place to the player of the first place. The item transferring section 161d renewably stores the number of the dragon chips in the rank storage 162a.

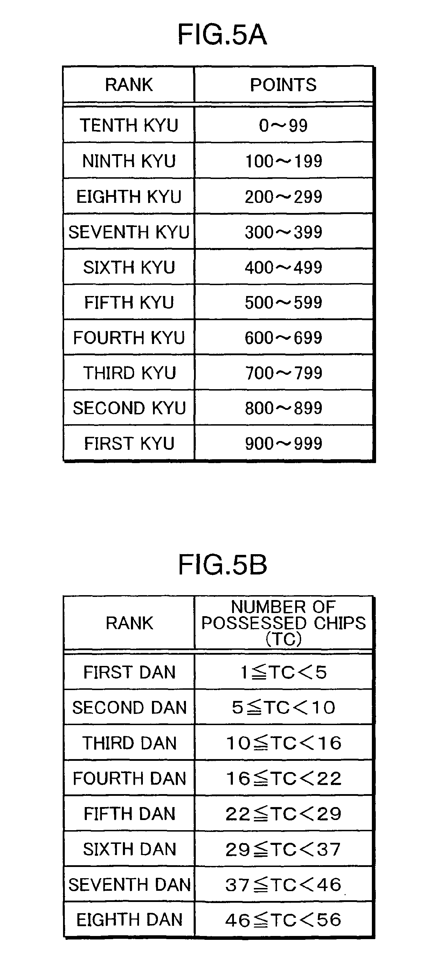

The rank determining section 161e is for determining the rank representing the level of the player' strength in the game based on the number of the items the player virtually possesses. A specific rank determining method is described below with reference to FIGS. 5.

FIG. 5A is one example of a table showing assigning conditions for ranks (tenth *Kyu* to first *Kyu)* representing the level of the player's strength and determined by the rank determining section 161e. A player playing this game for the first time is assumed to have a rank of tenth Kyu. For example, the rank is assumed to be the ninth *Kyu* in a point range of 100 to 199. As the points increase (or decrease), the rank is raised (or lowered). The rank is assumed to be the first Kyu in a point range of 900 to 999. The rank is assumed to be the first Dan when the points become 1000 or more.

FIG. 5B is one example of a table showing assigning conditions for ranks (first Dan to eighth Dan) representing the level of the player's strength and determined by the rank determining section 161e. As described above, the item assigning section 161b virtually assigns three items called dragon chips to the player whose points become 1000 or more. As a result of a transfer by the item transferring section 161d of dragon chips virtually possessed by the players among the players based on the judgment result by the result judging section 161c, the numbers of the dragon chips virtually possessed by the players change and are renewably stored in the rank storage 162a. For example, the rank is assumed to be the second Dan when the number of the dragon chips is 5 or more, but below 10. As the number of the dragon chips increase (or decrease), the rank is raised (or lowered). The rank is assumed to be the eighth Dan when the number of the dragon chips becomes 46 or more. It should be noted that, if a player of first Dan comes to possess no dragon chip as a result of a game, he is lowered to first *Kyu.*

Specifically, the rank determining section 161e determines a corresponding rank based on the points determined by the item assigning section 161b and the number of items determined by the item assigning section 161b and the item transferring section 161d with reference to the rank tables shown in FIGS. 5.

The timer 161f is for measuring the remaining time of the tile discarding time TA that is a time limit from the draw of one tile to the discard of one tile. The game progress controlling section 161a receives the entry of the selection of the tile to be discarded from the player by means of the touch panel 11a only within this tile discarding time TA. Here, the timer 161f sets the tile discarding time TA by reading the rank of the player from the rank storage 162a and the tile discarding time TA corresponding to the read rank from the discarding-time storage 162b.

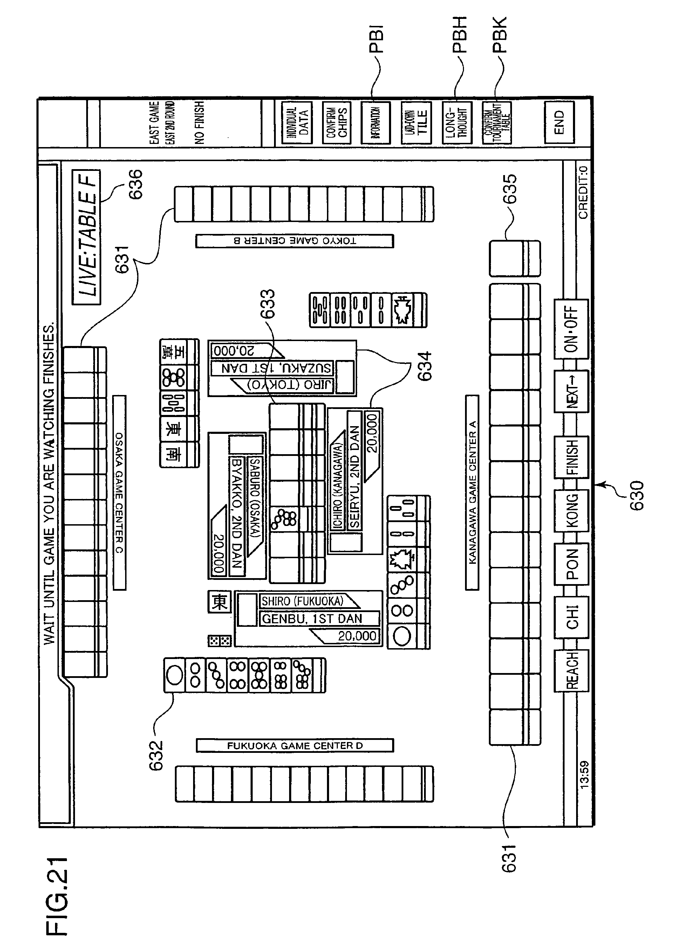

The extension request receiving section 161g receives the depression of a later-described long-thought button (see FIG. 21) displayed on the monitor 11 as a discarding-time extension request signal based on a signal from the touch panel 11a.

The extension processing section 161h judges whether or not the depression of the long-thought button of the touch panel 11a by the player (reception of the discarding-time extension request signal by the extension request receiving section 161g) has been received at least within the tile discarding time TA (here, within 10 seconds after the draw of one tile) and whether or not the number of extensions of the tile discarding time TA does not exceed a predetermined number (here, 0 time) (the tile discarding time TA has not been extended yet), and permits the reception of the extension request of the tile discarding time TA if the above restricting conditions are satisfied. In the case of permitting the reception of the extension request, the extension processing section 161h adds a specified extra time AT (e.g. five seconds) to the remaining time of the tile discarding time TA measured by the timer 161f.

The rank storage 162a is for storing the number of the items and the rank in correspondence with the identification information of the player. Here, the number of the items and the rank corresponding to the identification information of the player are read from the player information storage 362a of the central server 3 to be described later and stored in the rank storage 162a by the game progress controlling section 161a at the start of the game.

The discarding-time storage 162b is for storing the tile discarding time TA for each rank. Here, the tile discarding time TA set for each rank is read from a storage of the central server 3 and stored in the discarding-time storage 162b by the game progress controlling section 161a at the start of the game.

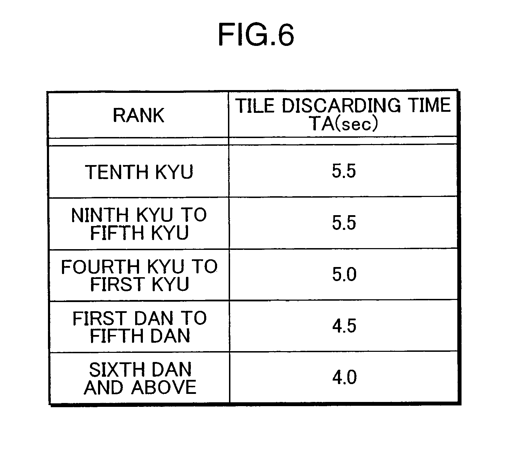

FIG. 6 is one example of a table showing the tile discarding times TA set for the respective ranks and stored in the discarding-time storage 162b. The higher the rank, the shorter the tile discarding time TA is set. As shown in FIG. 6, the tile discarding time TA is, for example, set to be 5.5 seconds for tenth *Kyu*, 5.0 seconds for third *Kyu*, 4.5 seconds for third Dan and 4.0 seconds for seventh Dan.

Since the tile discarding time TA is set in accordance with the rank in this way, a suitable tile discarding time TA is set according to the player's strength in the mahjong game and the game smoothly proceeds. In other words, as the player becomes stronger (has a higher rank), he can select a tile to be discarded within a shorter period of time. The progress of the game can be advanced by letting strong players select tiles to be discarded within shorter tile discarding times TA.

Referring back to the construction diagram shown in FIG. 4, the functional construction of the client terminal unit 1 is described. The table storage 162c is for storing the table information generated by a combination determining section 361d of the central server 3 to be described later and relating to the mahjong table where the client terminal unit 1 is virtually playing mahjong. Specifically, the table storage 162c stores the identification information of the client terminal units 1 constituting the mahjong table where the client terminal unit 1 is virtually playing mahjong, the player information such as the ranks of the players operating the respective client terminal units 1 constituting the mahjong table where the client terminal unit 1 is virtually playing mahjong, and the like.

The progress status storage 162d is for storing information on the progress status of the game on the mahjong table where the client terminal unit 1 is virtually playing mahjong, specifically for storing information on the progress status of the game necessary to display a competition screen similar to a game watch screen 630 shown in FIG. 21 and storing the hand information, discarded tile information, chip information and the like of four competitors constituting the mahjong table.

The watched table storage 162e is for storing the table information that is information on the mahjong table (hereinafter, "watched table") determined by a game watch instructing section 361f of the central server 3 to be described later and serving as a subject of the game watch screen 630 to be displayed on the monitor 11 of the client terminal unit 11 (= the player of the client terminal unit 1 is virtually watching), the game watch screen 630 being described later with reference to FIG. 21. Specifically, the watched table storage 162e is for storing the identification information of the client terminal units constituting the watched table, the player information such as the ranks of the players operating the respective client terminal units 1 constituting the mahjong table where the client terminal unit 1 is virtually playing mahjong.

The watched table progress status storage 162f is for storing information on the progress status of the game at the watched table, specifically for storing information on the progress status of the game necessary to display the game watch screen 630 shown in FIG. 21 and the hand information, discarded tile information, chip information and the like of four competitors constituting the watched table.

The watching terminal storage 162g is for storing the identification information of other client terminal units 1 (hereinafter, "watching terminal units 1α") corresponding to spectators virtually watching the mahjong table where the client terminal unit 1 is competing.

Specifically, the watching terminal units 1α are the other client terminal units 1 operated by the players as spectators watching the mahjong table ("watched table") where the client terminal unit 1 is competing. In other words, the watching terminal units 1α are the client terminal units 1 in which the game watch screen of FIG. 21 showing the competition status of the watched table is displayed on the monitors 11.

The progress status updating section 161k is for updating the progress status of the game stored in the progress status storage 162d by transmitting and receiving information on the progress status of the game between the client terminal unit 1 and the other client terminal units 1 (hereinafter, "competitor terminal units 1β) constituting the mahjong table where the client terminal unit 1 is virtually playing mahjong in accordance with the table information stored in the table storage 162c.

The progress status updating section 161k also receives an instruction from the central server 3, stores the identification information of the watching terminal units 1α in the watching terminal storage 162g, and causes the progress status receiving section 161m to transmit the information on the progress status of the game stored in the progress status storage 162d to the watching terminal units 1α if the mahjong table where the client terminal unit 1 provided with this progress status updating section 161k is playing as a competitor is determined as a mahjong table to be watched by the other client terminal units 1 (watching terminal units 1α) by the game watch instructing section 361f of the central server 3 to be described later.

The progress status transmitting/receiving section 161m updates the information on the progress status of the game stored in the watched table progress status storage 162f by receiving the information on the progress status of the game from master clients (hereinafter, "watched terminal units 1γ") constituting the watched table.

The progress status transmitting/receiving section 161m also reads the information on the progress status of the game stored in the progress status storage 162d and transmits it to the watching terminal units 1α in accordance with an instruction from the progress status updating section 161k.

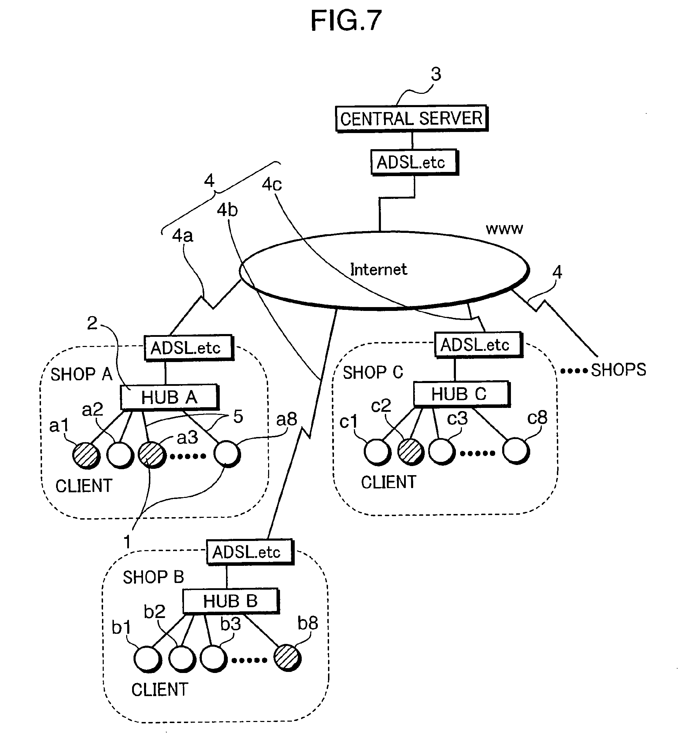

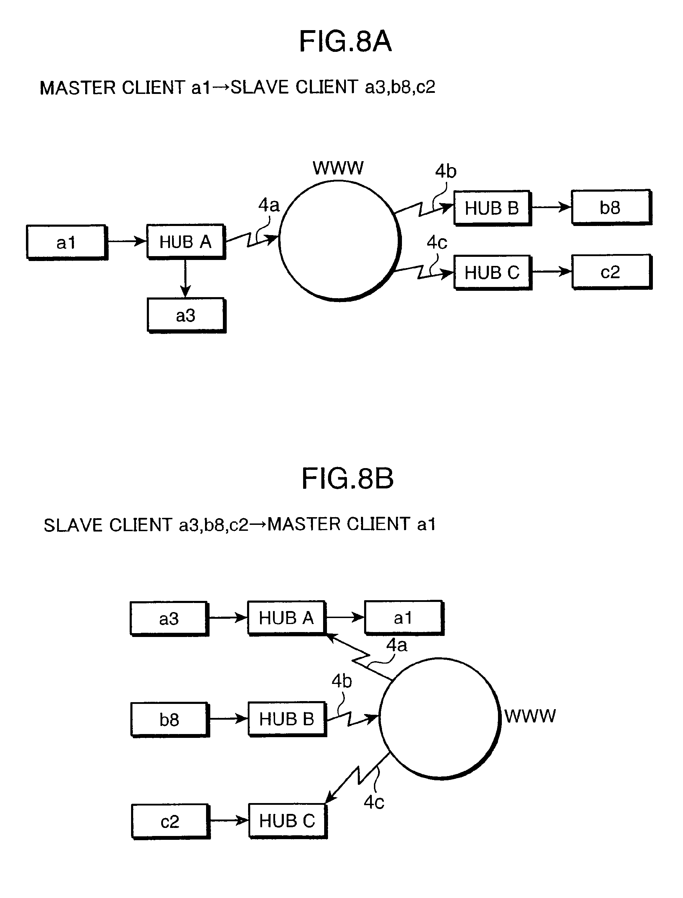

Here, a case where client terminal units a1, a3 connected with a hub A via special lines 5 and a client terminal unit b8 connected with a hub B via a special line 5, and a client terminal unit c2 connected with a hub C via a special line 5 play a game in the same game space as shown in FIG.7 is specifically described for the contents of the process of the progress status updating section 161k with reference to FIG. 8.

Here is described a case where the client terminal units a1, a3, b8 and c2 are virtually combined to play a game at the same table (in the same game space) by the central server 3. The central server 3 sets the client terminal unit 2 (here, client terminal unit a1) received at an earliest timing as a "master client" fulfilling the central role in the transmission and reception of information among the client terminal units 1, sets the other client terminal units 1 as "slave clients" fulfilling subordinate roles in the transmission and reception of information among the client terminal units 1, and transmits the result of the setting to the respective client terminal units 1. Each client terminal unit 1 stores the received result of setting the master client and the slave clients in the table storage 162a.

FIGS. 8 are diagrams showing examples of contents transmitted and received in the form of operation signals by the progress status updating sections 161k of the client terminal units a1, a3, b8 and c2. Here is described a case where the master client is the client terminal unit 1a. FIG. 8A is a diagram showing transmission paths of operation signals from the master client a1 to the slave clients a3, b8 and c2, and FIG. 8B is a diagram showing transmission paths of operation signals from the slave clients a3, b8 and c2 to the master client a1.

As shown in FIG. 8A, the operation signal from the master client a1 is transmitted to the slave client a3 via the hub A. Further, the operation signal from the master client a1 is transmitted to the slave client b8 via the hub A, communication lines 4a, 4b and hub B. Similarly, the operation signal from the master client a1 is transmitted to the slave client c2 via the hub A, communication lines 4a, 4c and hub C.

As shown in FIG. 8B, the operation signal from the slave client a3 is transmitted to the master client a1 via the hub A. Further, the operation signal from the slave client b8 is transmitted to the master client a1 via the hub B, communication lines 4b, 4a and hub A. Similarly, the operation signal from the slave client c2 is transmitted to the master client a1 via the hub C, communication lines 4c, 4a and hub A.

Specifically, the master client a1 transmits the operation information of its own to all the other client terminal units 1 (= slave clients a3, b8 and c2), and receives the operation signals from the slave clients a3, b8 and c2 and further transmits each received operation signal to all the slave clients (e.g. slave clients b8 and c2) except the one (e.g. slave client a3) from which the operation signal was received. Further, the slave clients a3, b8 and c2 transmit the operation information of their own to the master client a1, and receive the operation signals from all the other client terminal units 1 (e.g. the slave clients b8 and c2) via the master client a1.

In this way, the information in the progress status storages 162d is updated every time the operation signals from the client terminal units a1, a3, b8 and c2 are received through the transmission of the operation signals from the respective client terminal units 1 (client terminal units a1, a3, b8 and c2) by the progress status updating sections 161k of the client terminal units a1, a3, b8 and c2. Thus, the client terminal units a1, a3, b8 and c2 proceed the game using the progress information stored in the progress status storages 162d of the respective client terminal units 1, whereby the temporary synchronization in the progress of the game (progress statuses of the game are brought into coincidence) among the client terminal units a1, a3, b8 and c2 can be easily controlled.

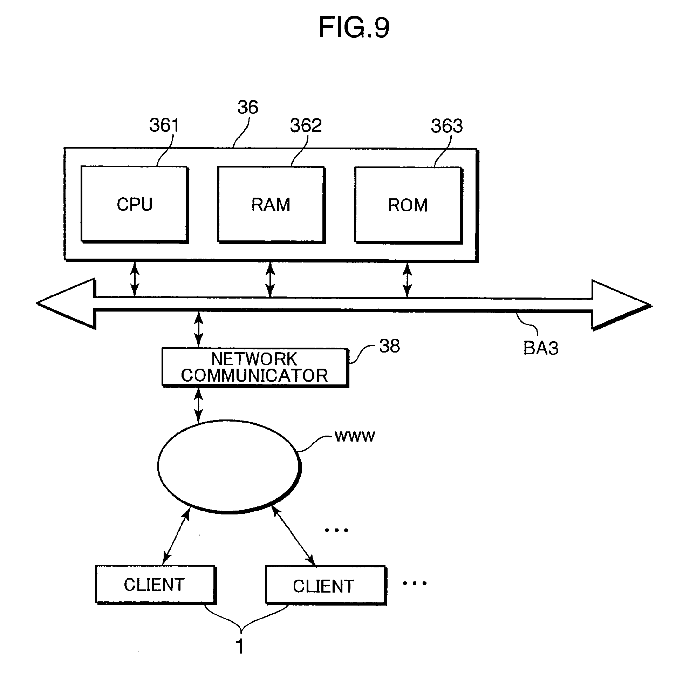

FIG. 9 is a hardware construction diagram showing one embodiment of the central server 3. A control unit 36 is for controlling the overall operation of the central server 3, and is provided with an information processor (CPU) 361, a RAM 362 for temporarily saving information and the like obtained during processes, and a ROM 363 storing specified image information and the like beforehand.

Out of various data stored in the ROM 363, those that can be stored in a detachable storage medium may be made readable by a driver such as a hard disk drive, an optical disk drive, a flexible disk drive, a silicon disk drive, or a cassette medium reader. In such a case, the recording medium is, for example, a hard disk, an optical disk, a flexible disk, a CD, a DVD or a semiconductor memory.

The network communicator 38 is for transmitting and receiving various data to and from a plurality of client terminal units 1 via a network such as WWW. It should be noted that a game progress administration program of the present invention is stored in the ROM 363 and loaded into the RAM 362, and the game progress administration program in the RAM 362 is successively executed by the CPU 361 to realize the respective functions.

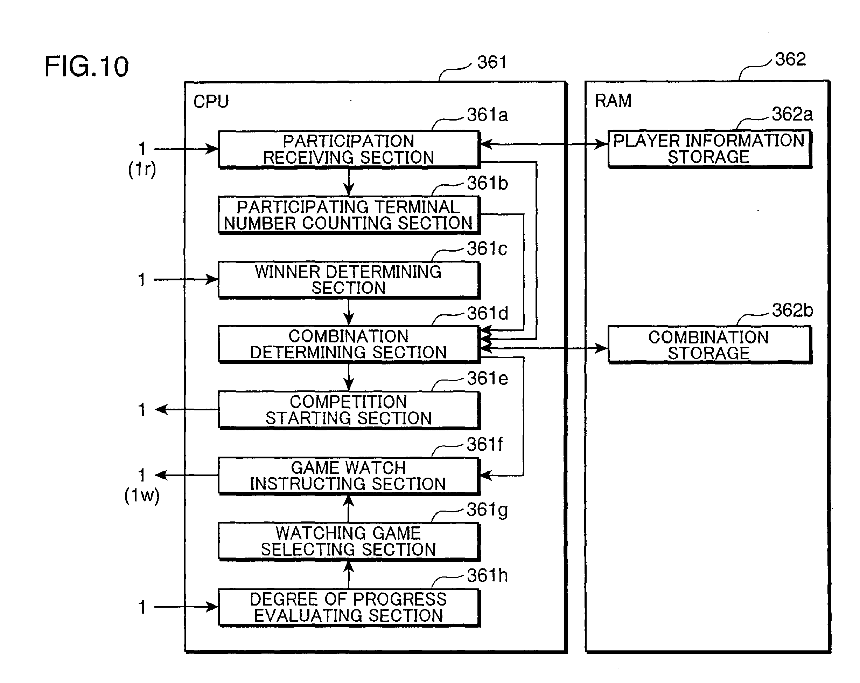

FIG. 10 is one example of a functional construction diagram showing the control unit 36 of the central server 3. The CPU 361 of the control unit 36 is provided with a participation receiving section 361a for receiving the participation in the competition game from the client terminal units 1, and a participating terminal number counting section 361b for counting a participating terminal number RN that is the number of the participating terminal units 1r as the client terminal units 1 whose participation was received by the participation receiving section 361a.

The CPU 361 of the control unit 36 is also provided with a winner determining section (corresponding to winner determining means) for determining players advancing to the next round (= second round (or third round)) as winners every time the competition game of each combination constituting the first round (or second round) ends; a combination determining section 361d (corresponding to combination determining means) for fitting the winners determined by the winner determining section 361c to one combination of the competition game constituting the next round (= second round (or third round)) (hereinafter, combination to which the winners are fitted by the combination determining section 361d is referred to as a "selected combination ST"); a competition starting section 361e (corresponding to competition starting means) for instructing the start of the competition game of the next round (= second round (or third round)) to the client terminal units 1 included in the selected combination St if it is judged that the selected combination ST has been filled up with four competitors as a result of fitting the winner player to the selected combination ST; and a game watch instructing section 361f (corresponding to game watch means) for causing the game screen of an ongoing competition game constituting the previous round (= first round (or second round)) to be displayed on competition waiting terminal units 1w, which are client terminal units 1 included in the selected combination ST, until the selected combination ST is filled up with four competitors after the winner player was fitted to the selected combination St.

The CPU 361 of the control unit 36 is further provided with a watching game selecting section 361g (corresponding to watching game selecting means) for selecting a competition game of one combination in accordance with a specified rule from the ongoing competition games constituting the first round (or second round), and a degree of progress evaluating section 361h (corresponding to degree of progress evaluating means) for evaluating degrees of progress of the competition games of the combinations constituting the round for each round.

The CPU 361 of the control unit 36 is furthermore provided with a player information storage 362a for storing the number of items, the rank and the like of each player in correspondence with the identification information of the player (user ID data), and a combination storage 362b for storing combination information determined by the combination determining section 361d.

The participation receiving section 361a receives the participation in the competition game from the client terminal units 1, specifically receives the identification information of the players necessary for the individual authentication from the client terminal units 1 and conducts the individual authentication.

The participating terminal number counting section 361b counts up the participating terminal number RN every time the participation in the competition game is received by the participation receiving section 361a, and resets the participating terminal number RN to 0 if the participating terminal number RN is in agreement with a maximum participating terminal number RNM (here, 16) that is a total number of game terminal units constituting the competition game tournament or if a reset time LT (e.g. 5 sec.) elapses after a timing at which the participating terminal number RN changed from 0 to 1 (i.e. timing at which the participation in the competition game is first received by the participation receiving section 361a after the reset).

Specifically, the participating terminal number counting section 361b counts the number of the participating terminal units 1r, whose participation in the competition game was received by the participation receiving section 361a and to which no instruction was given to start the competition by the competition starting section 361e, as the participating terminal number RN.

The winner determining section 361c determines winners advancing to the next round (= second round (or third round)) based on the game result of the competition game of each combination received from the client terminal unit (master client) every time the competition game of each combination constituting the first round (or second round) ends. Here, out of four competitors of each competition game, the top twos (players in the first and second places) are determined as winners advancing to the next round.

The combination determining section 361d is for fitting the participating terminal units 1r as the client terminal units 1 whose participation was received by the participation receiving section 361a to a combination constituting the first round of the competition game tournament in accordance with a specified rule, storing the combination information of the respective combinations constituting the first round in the combination storage 362b, and transmitting the combination information (here, table information) to the client terminal units 1. thereby causing the client terminal units 1 to store the combination information in the table storages 162c.

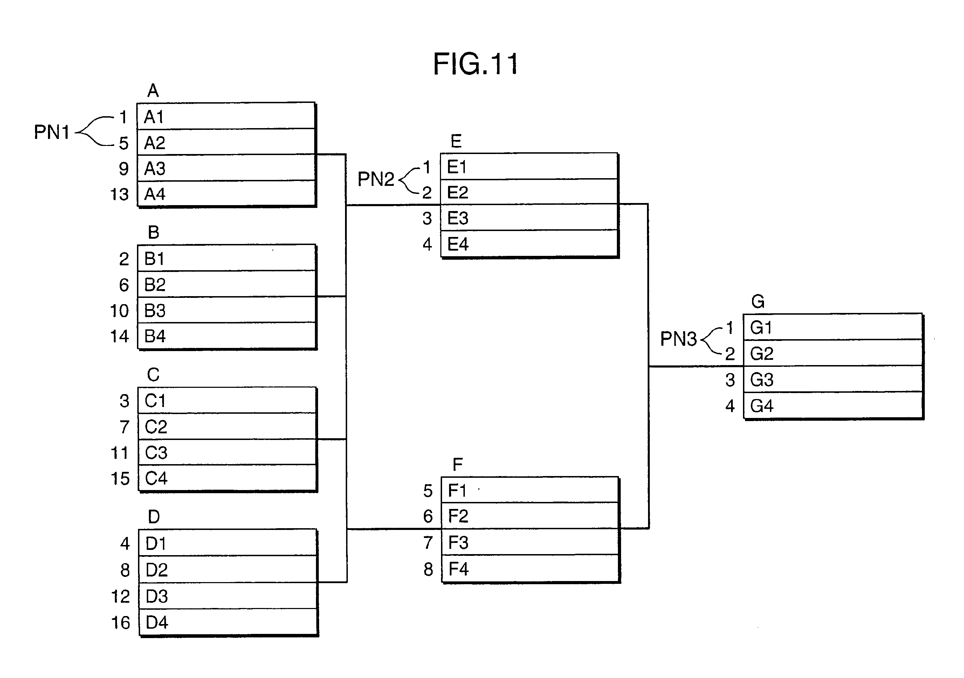

FIG. 11 is one example of a diagram showing the rule of fitting the participating terminal units 1r in the combinations of the tournament by means of the combination determining section 361d. As described above, the tournament here is the one with three rounds and comprised of frames A1 to G4 in which sixteen players (sixteen participating terminal units 1r) are fitted. As shown in FIG. 11, in the first round, the competition games are played in a total of four groups (at four tables A to D) including group A made up of four players A1 to A4, group B made up of four players B1 to B4, ..., group D made up of four players D1 to D4. In the second round, the competition games are played at a total of two tables E, F among eight players, who were in the first place or in the second place (winners) in the first round. In the final round, the competition game is played at one table constituted by four winners in the second round.

At the left end of FIG. 11 are written order numbers PN1 to PN3 representing the order of fitting the players in the combinations of the respective rounds of the tournament. Specifically, four players are fitted in the same order of the tables (tables A, B, C and D); and the remaining eight players are similarly fitted. In this way, the combination determining section 361d fits the participating terminal units 1r in the combinations constituting the first round of the competition game tournament so as to substantially equalize the numbers of the participating terminal units 1r fitted in the respective combinations (tables A to D) of the first round of the competition game tournament.

The functional construction diagram shown in FIG. 10 is described again. The combination determining section 361d starts the process of fitting the participating terminal units 1r in the combinations of the competition game tournament again from a timing at which the participating terminal number RN is reset by the participating terminal number counting section 361b. In other words, the process of fitting the participating terminal units 1r in the combinations of the competition game tournament is carried out again if the sixteen participants constituting the first round of the tournament have been fitted or the reset time LT (e.g. 5 seconds) has lapsed after the start of the process of fitting the participating terminal units 1r in the tournament. This process of fitting the participating terminal units 1r in the combinations is repeatedly carried out.

The combination determining section 361d further monitors the respective combinations of the competition games constituting the next round (= second round (or third round)) and fits the winners to one combination (hereinafter, combination to which the winners are fitted by the combination determining section 361d is referred to as a "selected combination ST") every time the winners are determined by the winner determining section 361c.

Specifically, the combination determining section 361d fits the winners determined by the winner determining section 361c preferentially in the combination, in which at least one winner is already fitted, out of the combinations constituting the next round (= second round (or third round)). Here, since each combination is constituted by four competitors and two winners are determined by the winner determining section 361c, the combination determining section 361d fits the winners preferentially in the combination in which two winners are already fitted.

In other words, the combination determining section 361d fits the winners determined by the winner determining section 361c in the combination, in which two winners are already fitted, out of the combinations constituting the next round (= second round (or third round) if there is any such combination, and selects a combination, in which no winner has been fitted yet, out of the combinations constituting the next round (= second round (or third round)) and fits the winners determined by the winner determining section 361c therein if there is no combination in which two winners are already fitted.

In addition, the combination determining section 361d selects one client terminal unit 1 as a master client from the client terminal units 1 included in the combination and selects the remaining client terminal units 1 as slave clients when the combination is filled up with four competitors. Here, the combination determining section 361d selects the client terminal unit 1 having participated at an earliest timing as a master client in each combination of the first round, and selects the client terminal unit 1 whose result in the first round (or second round) was the first place as a master client out of the two client terminal units 1 first fitted in each combination in the second round (or third round).

The competition starting section 361e allots one game space (virtual table) to one combination in accordance with the combinations constituting the first round of the tournament generated by the combination determining section 361d, and instructs the participating terminal units 1r to start the competition games of each round.

The competition starting section 361e also allots one game space (virtual table) to the selected combination ST and instructs the participating terminal units 1r included in this selected combination ST to start the competition game of the next round (= second round (or third round)) if the selected combination ST is filled up with four competitors as a result of fitting the winners in the selected combination ST.

The game watch instructing section 361f causes the game screen of an ongoing competition game constituting the previous round (= first round (or second round)) to be displayed on the competition waiting terminal units 1, which are the client terminal units 1 included in the selected combination ST, until the selected combination ST is filled up with four competitors after the winners are fitted to the selected combination ST.

The game watch instructing section 361f also causes the game screen of the competition game of one combination selected by the watching game selecting section 361g to be displayed on the competition waiting terminal units 1w. As described later, the watching game selecting section 361g selects the combination having the most advanced degree of progress out of the combinations of the competition games constituting the previous round (= first round (or second round)). Thus, the game watch instructing section 361f causes the game screen of the competition game of the combination having the most advanced degree of progress to be displayed on the competition waiting terminal units 1w, out of the combinations of the competition games constituting the previous round (= first round (or second round)).

The watching game selecting section 361g selects one combination having the most advanced degree of progress evaluated by the degree of progress evaluating section 361h out of the combinations of the competition games constituting the previous round (= first round (or second round)).

The degree of progress evaluating section 361h evaluates the degree of progress of the competition game based on a remaining round number KN that is the number of rounds to be played and a drawable tile number HN that is the number of drawable tiles remaining in a virtual pile. Specifically, the degree of progress evaluating section 361h evaluates such that the smaller the remaining round number KN, the higher the degree of progress of the competition game and, if the remaining round numbers KN are equal, evaluates such that the smaller the remaining drawable tile number HN, the higher the degree of progress of the competition game. For example, the remaining round number KN is one if the competition game is at the east's third round, and the remaining round number KN is zero if the competition game is at the east's fourth round.

The player information storage 362a are for storing the number of items, the rank and the like of each player in correspondence with the identification information of the player (user ID data). At the start of the competition game, the numbers of items and the ranks of the respective players are transmitted to the client terminal units 1 to be stored in the rank storages 162a. At the end of each competition game, the numbers of the items and the ranks stored in the rank storage 162a are updated based on those determined by the item transferring sections 161d and the rank determining sections 161e, and the updated numbers of items and ranks are transmitted to the central server 3 to be stored in the player information storage 362a.

The combination storage 362b are for storing the combination information determined by the combination determining section 361d, i.e. storing the identification information of the players included in the respective combinations, master client discrimination information (information representing distinction as to whether the client terminal unit is a master client or a slave client) and other information in correspondence with the identification information of the client terminal units 1.

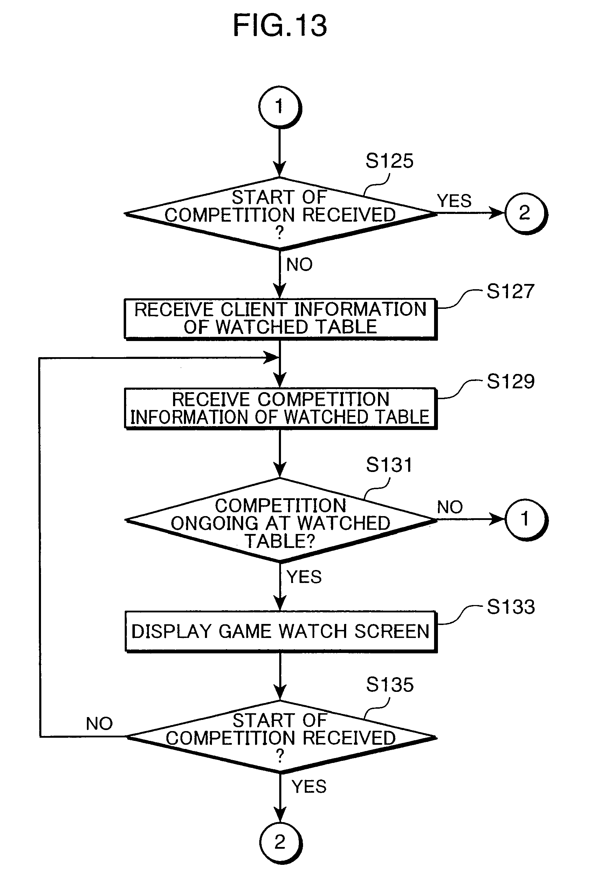

FIGS. 12 and 13 are one example of a flow chart of processes carried out by the client terminal unit 1. Unless otherwise specified, the following processes are carried out by the game progress controlling section 161a. First, the individual information such as the user ID data is read from the inserted individual card by the card reader 13 (Step S101), and transmitted to the central server 3 (Step S103).

The participation receiving section 361a of the central server 3 receives the participation in the competition game, the combination determining section 361d fits the client terminal units 1 in the combinations constituting the first round of the competition game tournament, and the competition starting section 361e judges whether or not the instruction information as to the start of the competition has been received (Step S105). If no instruction information as to the start of the competition is received (NO in Step S105), this routine enters a standby state. If such instruction information is received (YES in Step S105), the identification information and the player information such as the ranks of the competitors are received (Step S107).

Subsequently, the extension processing section 161h initializes the value of a flag S representing whether or not the long-thought button was depressed during each round to 0 (Step S108). Here, if the value of the flag S is 0, it represents that the long-thought button was not depressed during each round (a state where the request to extend the tile discarding time TA can be received). If this value is 1, it represents that the long-thought button was already depressed during each round (a state where the request to extend the tile discarding time TA cannot be received).

Subsequently, the competition game is executed (Step S109), and it is judged as to whether or not the other client terminal units (= watching terminal units 1α) corresponding to spectators virtually watching the mahjong table where the client terminal unit 1 is competing has been designated from the game watch instructing section 361f of the central server 3 (whether or not there are any spectators) (Step S111). If there are judged to be spectators (YES in Step S111), the progress status transmitting/receiving section 161m reads the information on the progress status of the game stored in the progress status storage 162d and transmits it to the watching terminal units 1α (Step S113). If there are judged not to be any spectators (NO in Step S111), this routine proceeds to Step S115.

In the process in Step S113 is ended or if the judgment result in Step S111 is negative, it is judged whether or not the competition games of each round have ended (Step S115). If the competition games are judged not to have ended (judged to be ongoing) (NO in Step S115), this routine returns to Step S109 and the processes of Steps S109 to S113 are repeatedly carried out. If the competition games are judged to have ended (YES in Step S115), the result judging section 161c judges the ranking, the item transferring section 161d transfers the dragon chips, the rank determining section 161e determines the ranks, and the updated numbers of items and ranks are stored in the rank storage 162a. Then, the scores, the ranks, and the numbers of items of the competitors are transmitted as game results to the central server 3 (Step S117).

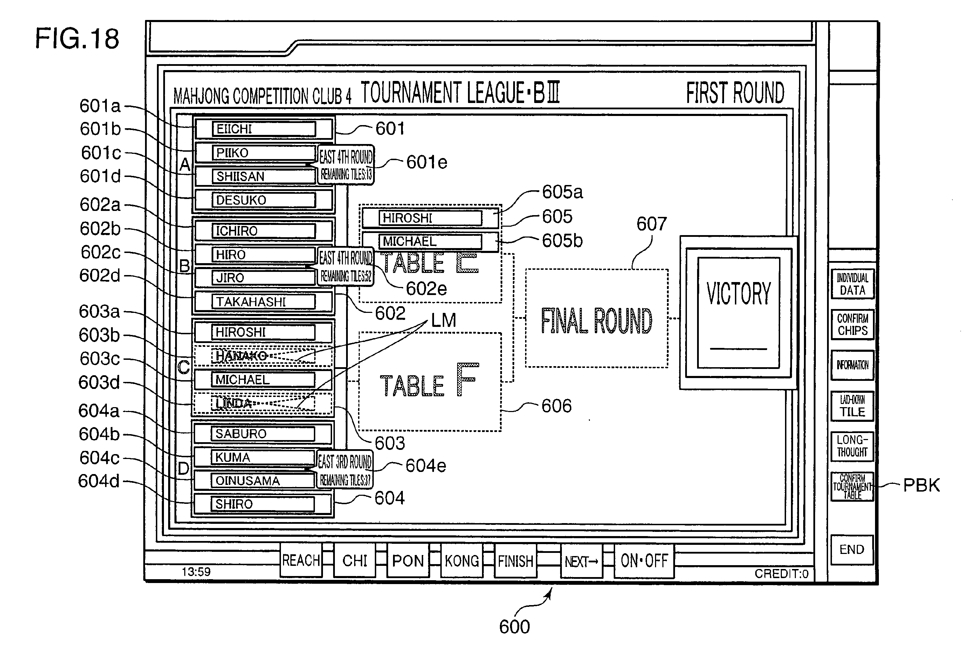

Then, the winner is determined by the competition determining section 361d of the central server 3, win-loss information representing whether or not the competitor is a winner is received and judgment is made as to whether or not the win-loss information representing a winner has been received (Step S119). If the win-loss information representing a loser has been received (NO in Step S119), this routine proceeds to Step S123. If the win-loss information representing a winner has been received (YES in S119), a progress status displaying screen shown in FIGS. 18 to 20 is displayed on the monitor 11 and it is judged as to whether or not the competition game was a final game (Step S121). If the competition game was not a final game (was in the first or second round) (NO in Step S121), this routine proceeds to Step S125 shown in FIG. 13.

If the competition game was a final game (YES in Step S121) or the win-loss information representing a loser was received in Step S115 (NO in Step S119), an entry, e.g. by means of the touch panel 11a is received and it is judged whether or not the competition game continues to be played (Step S123). If it is judged to continue to play the competition game (YES in Step S123), this routine returns to Step S103 and processes in Steps S103 to S121 are repeatedly carried out. If it is judged not to continue to play the competition game (NO in Step S123), this routine is ended.

If the judgment result in Step S121 is negative, it is judged whether or not instruction information to the effect of starting the competition game (hereinafter, "competition start instruction information") has been received from the competition starting section 361e of the central server 3 (Step S125) as shown in FIG. 13. If the competition start instruction information has been received (YES in Step S125), this routine returns to Step S107 shown in FIG. 12 and the processes in Step S107 and succeeding Steps are repeatedly carried out. Unless the competition start instruction information has been received (NO in Step S125), the table information of the watched table is received from the game watch instructing section 361f of the central server 3 by the progress status transmitting/receiving section 161m and stored in the watched table storage 162e (Step S127). Then, the information on the progress status on the watched table is received from the client terminal unit 1α as a master client of the watched table by the progress status transmitting/receiving section 161m and stored in the watched table progress status storage 162f (Step S129). Subsequently, it is judged whether or not the competition game is ongoing at the watched table (Step S131).

If the competition game is judged not to be ongoing at the watched table (NO in Step S131), this routine returns to Step S125. If the competition game is judged to be ongoing at the watched table (YES in Step S131), the information on the progress status at the watched table is read from the watched table progress status storage 162f and the game watch screen 630 shown in FIG. 21 to be described later is displayed on the monitor 11 (Step S133). Then, it is judged whether or not the competition start instruction information has been received from the competition starting section 361e of the central server 3 (Step S135). If the competition start instructing information has been received (YES in Step S135), this routine returns to Step S107 shown in FIG. 12 and the processes in Step S107 and succeeding Steps are repeatedly carried out. If the competition start instruction information has not been received (NO in Step S135), this routine returns to Step S129 and the processes in Step S129 and succeeding Steps are repeatedly carried out.

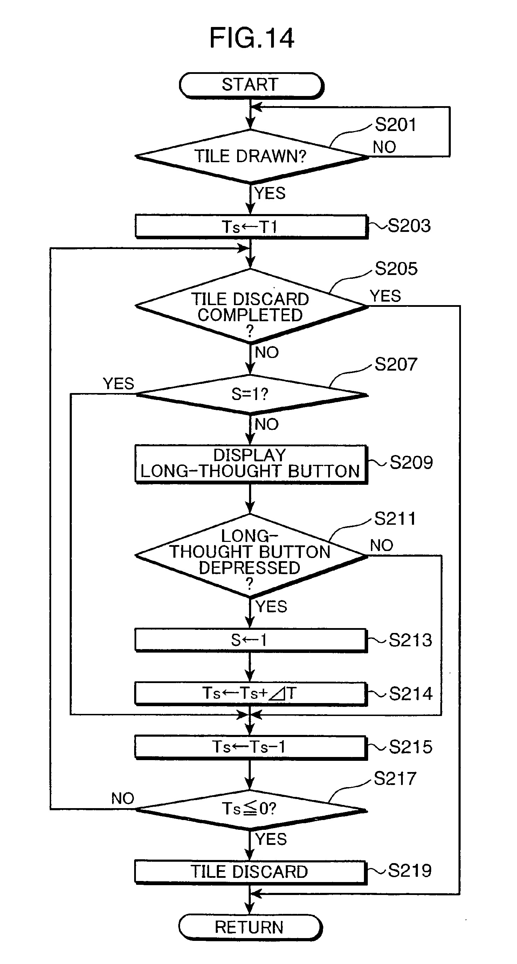

FIG. 14 is one example of a detailed flow chart showing the process of administering the tile discarding time TA in the competition process carried out in Step S109 of the flow chart shown in FIG. 12. First, whether or not any tile has been drawn is judged by means of the timer 161f (Step S201). If no tile is judged to have been drawn (NO in Step S201), this subroutine enters a standby state. If a tile is judged to have been drawn (YES in Step S201) , the value of a counter Ts for counting the remaining time of the tile discarding time TA is set to an initial value T1 (= tile discarding time TA) by the timer 161f (Step S203).

Then, the extension processing section 161h judges whether or not the discard of the tile has been completed (Step S205). This subroutine returns if the tile is judged to have been discarded (YES in Step S205), whereas it is judged whether or not the value of the flag S representing the depression of the long-thought button during each round is 1 (Step S207) if the tile is judged not to have been discarded (NO in Step S205). If the value of the flag S is judged to be 1 (YES in Step S207), this subroutine proceeds to Step S215. If the value of the flag S is judged not to be 1 (judged to be 0) (NO in Step S207), the extension processing section 161h causes the monitor 11 to display the long-thought button (Step S209) and the extension request receiving section 161g judges whether or not the long-thought button has been depressed (Step S211).

If the long-thought button is judged not to have been depressed (NO in Step S211), this subroutine proceeds to Step S215. If the long-thought button is judged to have been depressed (YES in Step S211), the extension processing section 161h sets the value of the flag S to 1 (Step S213) and the extra time ΔT is added to the value of the counter Ts (Step S214).

The timer 161f decrements the value of the counter Ts by 1 if the process in Step S214 is completed, if the judgment result in Step S207 is affirmative or if the judgment result in Step S211 is negative. Then, whether or not the value of the counter Ts is equal to or below 0 is judged by means of the timer 161f (Step S217).

If the value of the counter Ts is judged to be above 0 (larger than 0) (NO in Step S217), this routine returns to Step S205 and processes of Steps S205 to S215 are repeatedly carried out. If the value of the counter Ts is judged to be equal to or below 0 (YES in Step S217), the game progress controlling section 161a carries out the discard of the tile (Step S219) and this subroutine returns.

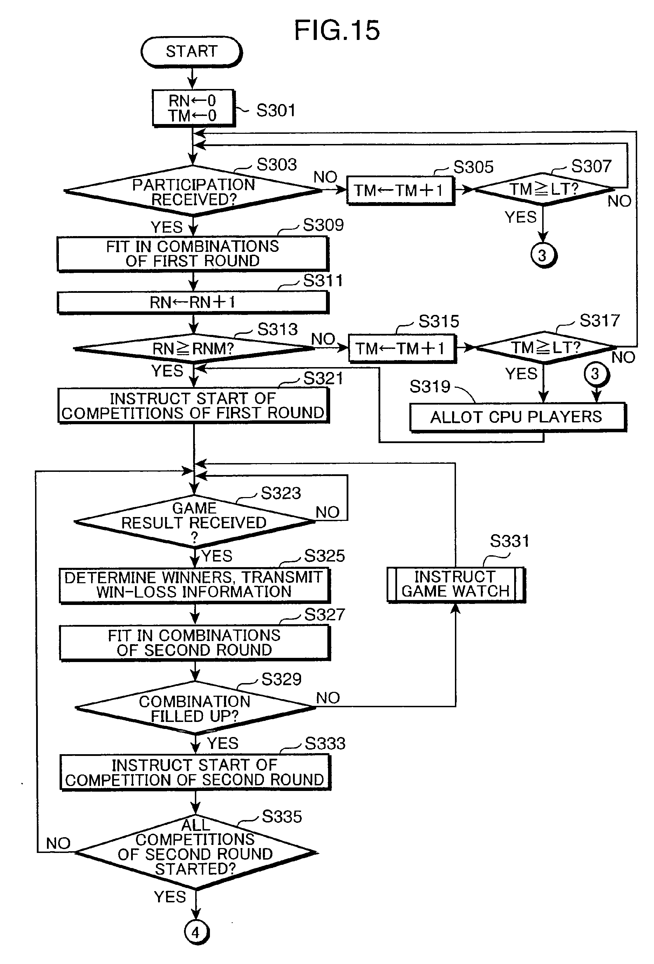

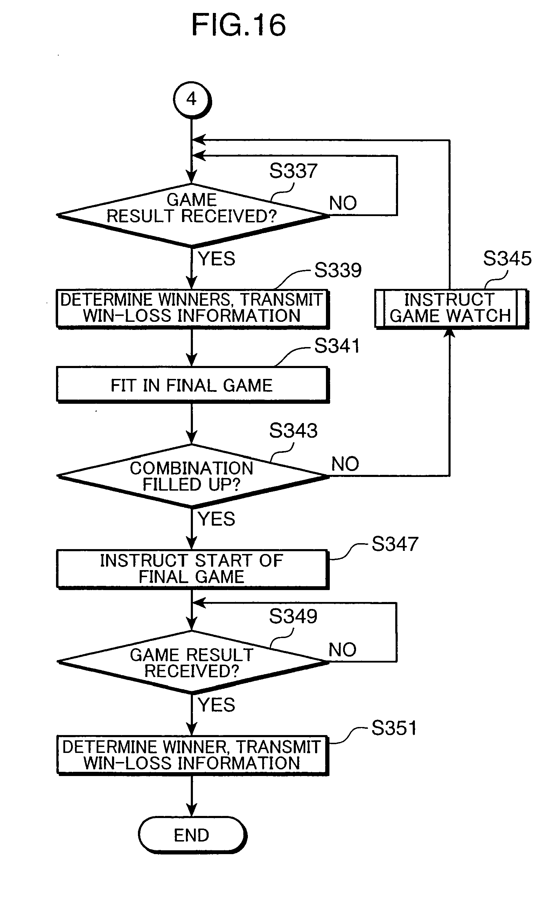

FIGS. 15 and 16 are one example of a flow chart of processes carried out by the central server 3. First, the participating terminal number counting section 361b initializes the value of the participating terminal number RN to 0, and initializes the value of a counter TM for counting the reset time LT set beforehand to 0 (Step S301). Subsequently, the participation receiving section 361a judges whether or not the participation in the competition game has been received from any client terminal unit 1 (Step S303).

If no participation in the competition game has been received (NO in Step S303), the participating terminal number counting section 361b increments the value of the counter TM only by one (Step S305) and judges whether or not the value of the counter TM has been equal to or above the reset time LT (Step S307). This routine returns to Step S303 if this value is judged not to be equal to or larger than the reset time LT (below the reset time LT) (NO in Step S307), whereas this routine proceeds to Step S319 if this value is judged to be equal to or larger than the reset time LT (YES in Step S307).

If the participation in the competition game has been received (YES in Step S303), the combination determining section 361d fits the participating terminal unit 1r as the client terminal unit 1 whose participation was received by the participation receiving section 361a in Step S303 in a combination of the competition game tournament (Step S309). The participating terminal number RN is incremented only by 1 by the participating terminal number counting section 361b (Step S311), and it is judged whether or not the participating terminal number RN is equal to or larger than the maximum participating terminal number RNM (Step S313).

If the participating terminal number RN is judged not to be equal to or larger than the maximum participating terminal number RNM (below the maximum participating terminal number RNM) (NO in Step S313), the participating terminal number counting section 361b increments the value of the counter TM only by one (Step S315) and judges whether or not the value of the counter TM is equal to or larger than the reset time LT (Step S317). This routine returns to Step S303 if this value is judged not to be equal to or larger than the reset time LT (below the reset time LT) (NO in Step S317), whereas this routine proceeds to Step S319 if this value is judged to be equal to or larger than the reset time LT (YES in Step S317).

If the judgment result in Step S307 is affirmative or if the judgment result in Step S317 is affirmative, the combination determining section 361d allots game terminal unit(s) 1 to be virtually operated by CPU player(s) as lacking participating terminal unit(s) 1r (Step S319) and this routine proceeds to Step S321. If the participating terminal number RN is judged to be equal to or larger than the maximum participating terminal number RNM (YES in Step S313) or if the process in Step S319 is completed, the competition starting section 361e instructs the participating terminal units 1r to start the competition games of the first round (Step S321).

Then, the winner determining section 361c judges whether or not game results have been received from the client terminal units 1 (Step S323). This routine waits on standby if the game results are judged not to have been received (NO in Step S323). The winner determining section 361c determines winners if the game results are judged to have been received (YES in Step S323) and win-loss information is transmitted to the client terminal units 1 (Step 5325). Subsequently, the combination determining section 361d fits the winners determined in Step S325 in the selected combination ST of the second round (Step S327).

Subsequently, the competition starting section 361e judges whether or not the selected combination ST has been filled up with four players (Step S329). If the selected combination ST is judged not to have been filled up yet (NO in Step S329), the game watch instructing section 361f transmits instruction information to the effect of displaying the game watch screen to the client terminal units 1 (Step S331) and this routine returns to Step S323. If the selected combination ST is judged to have been filled up (YES in Step S329), the competition starting section 361e transmits instruction information to the effect of starting the competition game of the second round to the client terminal units (Step S333). Then, the winner determining section 361c judges whether or not the competition games of all the combinations (here, two) of the second round have been started (Step S335). If it is judged that the competition games of all the combinations of the second round have not been started yet (NO in Step S335), this routine returns to Step S323 and the processes of Steps S323 to S333 are repeatedly carried out. If it is judged that the competition games of all the combinations of the second round have been started (YES in Step S335), the winner determining section 361c judges whether or not game results have been received from the client terminal units 1 (Step S337) as shown in FIG. 16. If the game results are judged not to have been received yet (NO in Step S337), this routine waits on standby. If the game results are judged to have been received (YES in Step S337), the winner determining section 361c determines winners and transmits win-loss information to the client terminal units 1 (Step S339). Subsequently, the combination determining section 361d fits the winners determined in Step S339 in the selected combination ST of the third round (final round) (Step S341).

Subsequently, the competition starting section 361e judges whether or not the selected combination ST has been filled up with four players (Step S343). If it is judged that all the players have not been selected yet (NO in Step S343), the game watch instructing section 361f transmits instruction information to the effect of displaying the game watch screen to the client terminal units 1 (Step S345) and this routine returns to Step S337. If it is judged that all the players have been selected (YES in Step S343), the competition starting section 361e transmits instruction information to the effect of starting the competition game of the final round to the client terminal units (Step S347). Then, the winner determining section 361c judges whether or not a game result has been received from the client terminal units 1 (Step S349). If the game result is judged not to have been received yet (NO in Step S349), this routine waits on standby. If the game result is judged to have been received (YES in Step S349), the winner determining section 361c determines a winner and transmits win-loss information to the client terminal units 1 (Step S351), whereby this routine is ended.

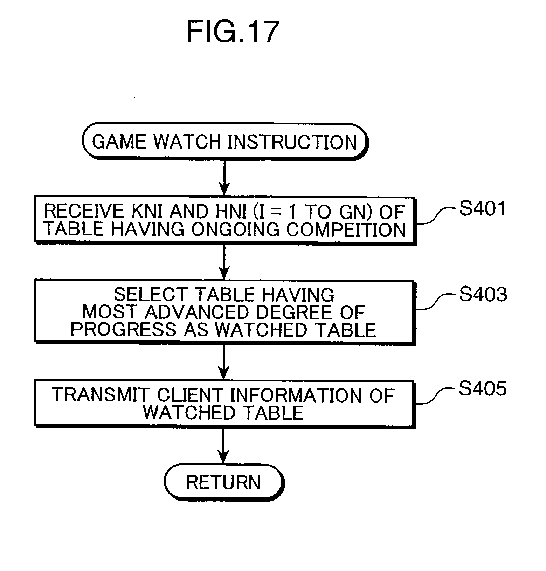

FIG. 17 is one example of a detailed flow chart showing the game watching process carried out in Step S331 shown in FIG. 15 and Step S345 shown in FIG. 16. First, the degree of progress evaluating section 361h evaluates the degrees of progress of the competition games of the combinations of each round (Step S401). Specifically, the remaining round number KNi and the remaining drawable tile numbers HNi (i = 1 to GN) are received from the client terminal units 1 for four combinations of the first round (competition game combination number GN = 4) or two combinations of the second round (competition game combination number GN = 2).

Then, the watching game selecting section 361g selects the table having the most advanced degree of progress based on the remaining round number KNi and the remaining drawable tile number HNi (i = 1 to GN) received in Step S401 (Step S403). Subsequently, the game watch instructing section 361f transmits the identification information of the watched terminal units 1γ to the competition waiting terminal units 1w (Step S405) and this subroutine returns.

FIG. 18 is one example of a diagram showing a progress status displaying screen displayed on the monitor 11 of the client terminal unit 1 in Step S121 of the flow chart shown in FIG. 12. On a progress status displaying screen 600, combination indicators 601 to 604 displaying the respective four combinations of the first round are displayed on the left side; combination indicators 605, 606 displaying the respective two combinations of the second round are displayed in the middle; and a combination indicator 607 displaying one combination of the final round is displayed on the right side.

Four name indicators 601a to 601d, ..., 604a to 604d displaying the names of four competitors are displayed in each combination indicator 601 to 604, and two name indicators 605a, 605b displaying the names of two competitors are displayed in the combination indicator 605. Further, "Hiroshi", "Hanako", "Michael" and "Linda" are respectively displayed as the names of the competitors in the name indicators 603a to 603d of the combination indicator 603, and a loser mark LM indicating a loser with x is displayed in each of the name indicators 603b, 603d.

If the name indicators are displayed in the combination indicators 601 to 607, as many competitors as the names displayed in the name indicators are fitted in the corresponding combinations. For example, it can be known that two competitors are already fitted in since the two name indicators 605a, 605b are displayed in the combination indicator 605. Further, "Hiroshi" and "Michael" who are the same names as those displayed in the name indicators 603a, 603c of the combination indicator 603 are displayed in the name indicators 605a, 605b. Thus, it can be known that the two winners of group C of the first round are fitted in group E of the second round.

Further, degree of progress indicators 601e, 602e, 604e displaying degrees of progress of the competition games are respectively displayed at the right side of the combination indicators 601, 602, 604. "East 4^{th} Round, Remaining Tiles: 13", "East 4^{th} Round, Remaining Tiles: 52" and "East 3^{rd} Round, Remaining tiles: 37" are displayed in the degree of progress indicators 601e, 602e, 604e, from which it can be known that the competition games are ongoing at East 4^{th} round, East 4^{th} round and East 3^{rd} round and the remaining drawable tile numbers HN, which are the numbers of drawable tiles remaining in virtual piles, are 13, 52 and 37 in the respective groups A, B, D. Accordingly, the degree of progress is advanced in the order of group A, group B and group D.

The progress status display screen 600 is displayed on the monitor 11 of the client terminal unit 1 operated by the player called "Hiroshi" (or "Michael") when this client terminal unit 1 finishes the competition of the first round (when the competition of the group C finishes). It should be noted that a confirmation button PBK for displaying the progress status of the tournament when being depressed by the player is displayed at the right bottom side of a screen such as a competition screen (not shown) displayed during the competition. When the confirmation button PBK is depressed, the progress status displaying screen shown in FIGS. 18 to 21 is displayed.

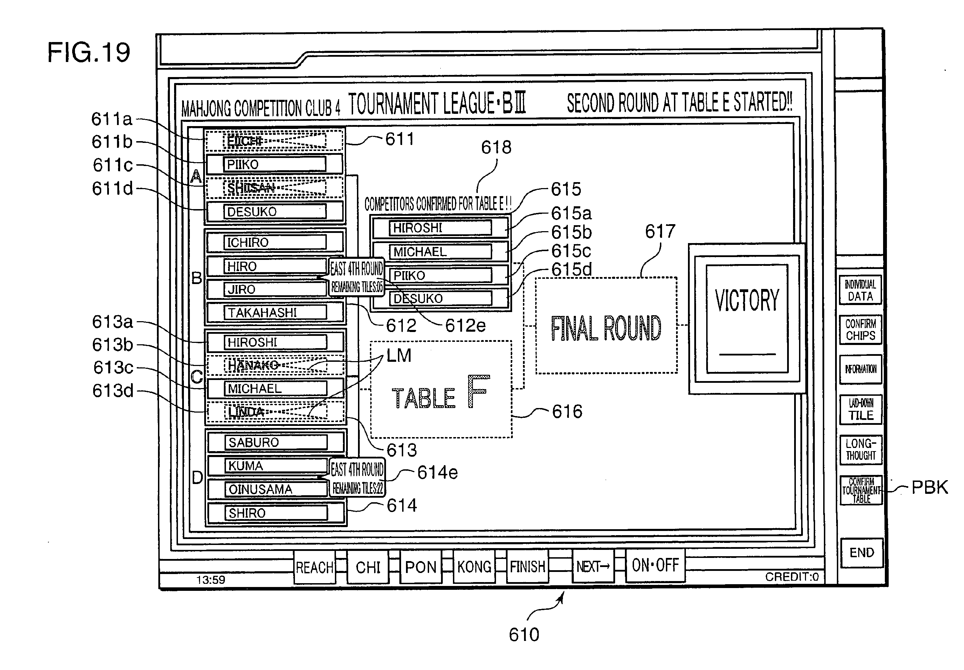

FIG. 19 is another example of a diagram showing a progress status displaying screen displayed on the monitor 11 of the client terminal unit 1 in Step S121 of the flow chart shown in FIG. 12. Similar to the progress status displaying screen 600 shown in FIG. 18, combination indicators 611 to 617 are displayed on a progress status displaying screen 610 and name indicators 611a to 611d, ..., 615a to 615d are displayed in the combination indicators 611 to 615. Further, the loser marks LM are displayed in the name indicators 611a, 611c, 613b and 613d, and degree of progress indicators 612e and 614e are displayed at the right side of the combination indicators 612, 614.

Further, a message indicator 618 displaying a message "E Table Competitors Confirmed ! ! " indicating that all the competitors (four competitors) have been fitted in the group E is displayed above the combination indicator 615. It should be noted that the progress status display screen 610 is displayed on the monitor 11 of the client terminal unit 1 operated by the player called "Piiko" (or "Desuko") when this client terminal unit 1 finishes the competition of the first round (when the competition of the group A finishes).

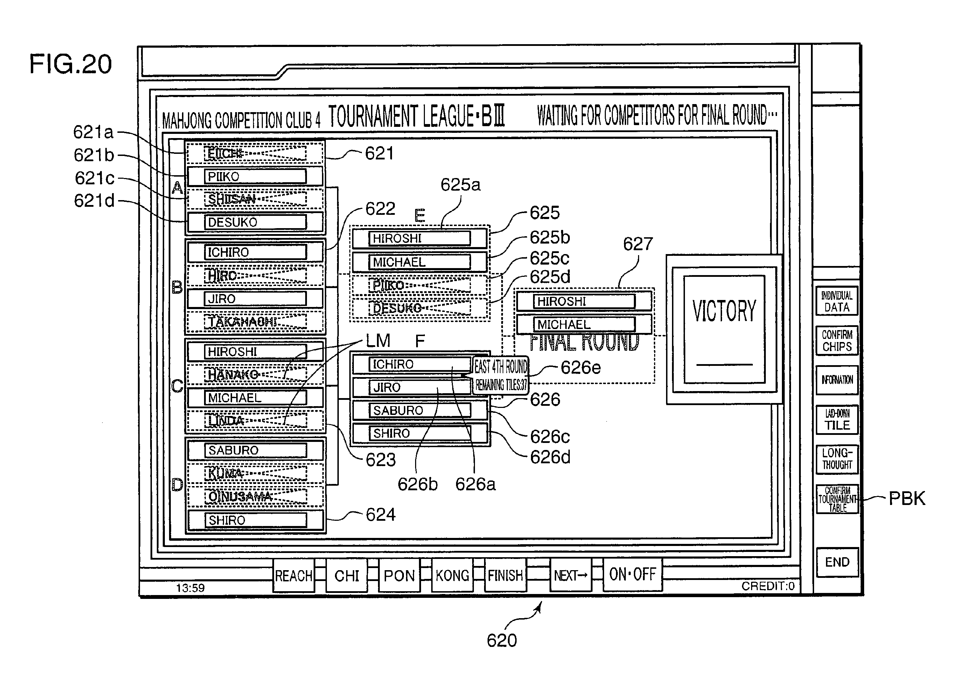

FIG. 20 is another example of a diagram showing a progress status displaying screen displayed on the monitor 11 of the client terminal unit 1 in Step S121 of the flow chart shown in FIG. 12. Similar to the progress status displaying screen 600 shown in FIG. 18, combination indicators 621 to 627 are displayed on a progress status displaying screen 620 and name indicators 621a to 621d, ..., 626a to 626d, and 627a, 627b are displayed in the combination indicators 621 to 627. Further, the loser marks LM are displayed in the name indicators 625c, 625d, and the like. Further, a degree of progress indicator 626e is displayed at the right side of the combination indicator 626.

It should be noted that the progress status display screen 620 is displayed on the monitor 11 of the client terminal unit 1 operated by the player called "Hiroshi" (or "Michael") when this client terminal unit 1 finishes the competition of the second round (when the competition of the group E finishes).

FIG. 21 is one example of a diagram showing the game watch screen displayed on the monitor 11 of the client terminal unit 1 in Step S133 of the flow chart shown in FIG. 13. It should be noted that this game watch screen 630 is displayed on the monitor 11 of the client terminal unit 1 operated by the player called "Hiroshi" (or "Michael") when this client terminal unit 1 finishes the competition of the second round (when the competition of the group E finishes).

Hand objects 631 representing the hands of the four players are displayed in a laid-down manner at the bottom, upper, left and right sides of the game watch screen 630. On the game watch screen 630, a pile object 633 representing a pile of tiles including *"Dora*" tiles is displayed substantially in the middle and discarded-tile objects 632 representing discarded tiles are displayed around the pile object 623.

Further, a game watch indicator 636 displaying game watch information is displayed at the right upper corner of the game watch screen 630. Since "LIVE: Table F" is displayed, it can be known that this screen is not a competition screen (not shown) displayed during the competition, but a game watch screen displaying the status of the table F. Name indicators 634 displaying the names of the respective competitors in the game are displayed between the pile object 633 and the discarded-tile objects 632 on the game watch screen 630. It can be known from the name indicators 634 that the names of the four competitors are, for example, "Ichiro", "Jiro", "Saburo" and "Shiro".

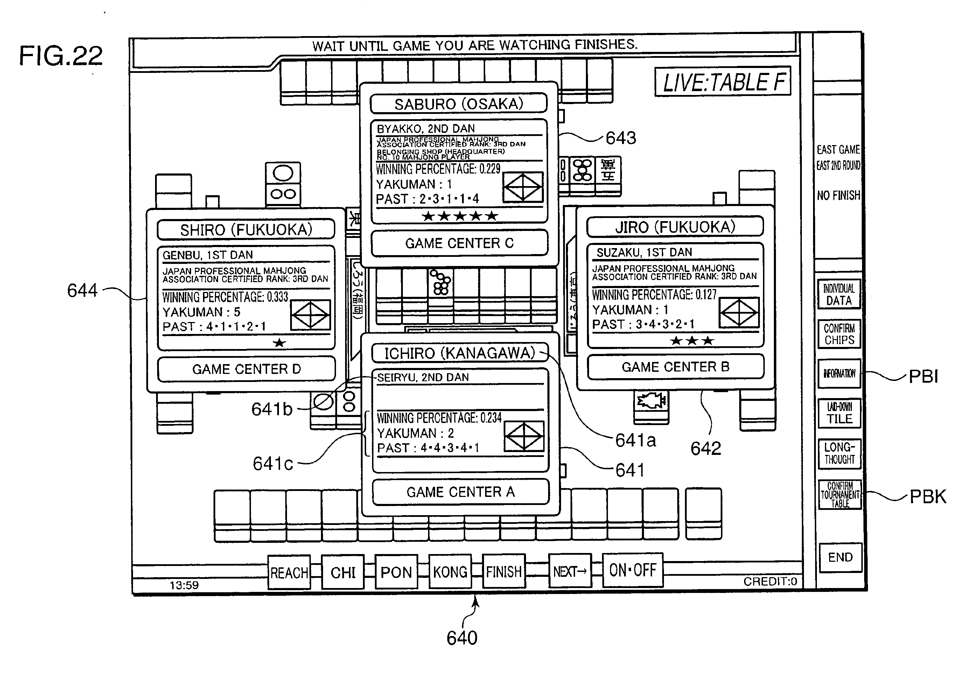

In addition, similar to the competition screen (not shown) displayed during the competition, buttons such as the long-thought button PBH to be depressed for the extension of the remaining time permitted to the player from the draw of a tile to the discard of a tile during the competition are displayed at the right side of the game watch screen 630. However, the operation of the operation buttons is not accepted on the game watch screen 630. Further, an information button PBI depressed in the case of displaying the player information of the competitors is displayed substantially in the middle of the right side of the game watch screen 630. A game watch screen 640 shown in FIG. 22 is displayed if the information button PBI is depressed.

FIG. 22 is another example of a diagram showing the game watch screen displayed on the monitor 11 of the client terminal unit 1 in Step S133 of the flow chart shown in FIG. 13. It should be noted that this game watch screen 640 is displayed when the information button PBI is depressed on the game watch screen 630 shown in FIG. 21.

On the game watch screen 640, information indicators 641 to 644 displaying the player information of the four competitors are displayed at the bottom, upper, left and right sides. Further, name indicators 641a to 644a displaying names, rank indicators 641b to 644b displaying ranks, and detail indicators 641c to 644c displaying other pieces of detailed information are displayed in the respective information indicators 641 to 644.

As described above, if the selected combination ST is not yet filled up with all the competitors after the winners are fitted in the selected combination ST by the combination determining section 361d, the client terminal units 1 (competition waiting terminal units 1w) included in this combination are in a standby state for the next round (= second round (or third round)). Since the game screen of the ongoing competition game is displayed as the game watch screen 630 shown in FIG. 21 to the competition waiting terminal units 1w, the players playing the competition waiting terminal units 1w can watch the competition game, thereby suppressing a drop in interest caused by the competition standby state.

Further, the winner determined by the winner determining section 361c is preferentially fitted in the combination, in which at least one winner is already fitted (here, combination in which two winners are already fitted), out of the combinations constituting the next round (= second round (or third round)) by the combination determining section 361d. Thus, the combination can be quickly filled up with the competitors, thereby shortening competition waiting times of the players operating the competition waiting terminal units 1w.

Furthermore, one combination having the most advanced degree of progress is selected by the game watch instructing section 361f, and the game screen of the competition game of this combination is displayed on the competition waiting terminal units 1w. Thus, the players operating the competition waiting terminal units 1w can watch the competition game of the combination having a high possibility of including the competitor(s) in the next round (= second round (third round)), thereby further improving convenience.

For example, the game watch screen 630 shown in FIG. 21 is a screen displayed on the client terminal unit 1 (competition waiting terminal unit 1w) operated by "Hiroshi" (or "Michael") who is a player waiting for the competition in the final round as a winner of the group E of the second round displayed on the progress status displaying screen 620 shown in FIG. 20. Since the competition status of the group F is displayed, the competition game of the combination (here, group F) including the competitor in the final round can be watched.

For example, the competition status of the group A having the most advanced degree of progress is displayed on the client terminal unit 1 (competition waiting terminal unit 1w) of "Hiroshi" (or "Michael") who is a player advanced to the second round as the winner of the group C of the first round displayed on the progress status displaying screen 600 shown in FIG. 18 and waiting for the next competition. Thus, the competition game of the combination (here, group A) including the competitors having a high possibility of including the competitors in the second round can be watched.

In addition, the degree of progress of the competition game can be easily and accurately evaluated since it is evaluated by the degree of progress evaluating section 361h based on the remaining round number KN and the remaining drawable tile number HN in the competition game comprised of a plurality of rounds (here, four rounds) simulating mahjong.

As described above, the winner determined by the winner determining section 361c is preferentially fitted in the selected combination ST, which constitutes the next round (= second round (or third round)) and in which at least one winner (here, two winners) are already fitted, by the combination determining section 361d. Thus, the combination can be efficiently filled up with the competitors, and the occurrence of a waiting time until the start of the next round (= second round (or third round)) can be suppressed.

Further, since two winners are determined by the winner determining section 361c even in a mahjong game in which four competitors compete with each other, the combination can be efficiently filled up with the competitors and the occurrence of a waiting time until the start of the next round (= second round (or third round)) can be further suppressed.

Although judgment is made as to whether or not the combination has been filled up with the competitors in Steps S329 and S343 in the flow chart shown in FIGS. 16 and 15 for the sake of convenience, it is sufficient to assume that the combination has been filled up with the competitors every time the winners of the competition games of two groups are determined. Specifically, since the winners are preferentially fitted in the combination, which constitutes the next round and in which the winners are already fitted, the competition game of one group of the next round can be started every time the winners of the competition games of the two groups are determined by the winner determining section 361c, thereby making it unnecessary for the competition starting section 361e to judge whether or not the combination has been filled up with the competitors (the start of the competition game may be instructed every time the winners of the two groups are determined by the winner determining section 361c). Therefore, the process can be simplified.

The client terminal units 1 (competition waiting terminal units 1w) included in the selected combination ST are in the competition standby state until the selected combination ST is filled up with the competitors after the winners are fitted in the select combination ST by the combination determining section 361d. However, since the game screen of the ongoing competition game in the previous round (= first round (or second round)) is displayed on the competition waiting terminal units 1w, the players of the competition waiting terminal units 1w can watch the competition game, thereby suppressing a drop in the interest in the competition game caused by the occurrence of the competition standby state.

In addition, since the game screen of the competition game of the combination selected by the watching game selecting section 361g is displayed, the player needs not select the combination to watch, thereby improving convenience.

Since the tile discarding time TA can be extended by depressing the long-thought button PBH (see FIG. 21) as described in the flow chart of FIG. 14, the convenience of the player can be improved. The progress of the game is expedited since the tile discarding times TA are set according to the ranks as described above (see FIG. 6). On the other hand, if the tile discarding times TA are uniformly applied, situations in which the players wish to think longer cannot be coped with. Accordingly, the tile discarding time TA is extended if the long-thought button PBH is depressed, wherefore the progress of the game is expedited and, at the same time, the convenience of the player can be improved

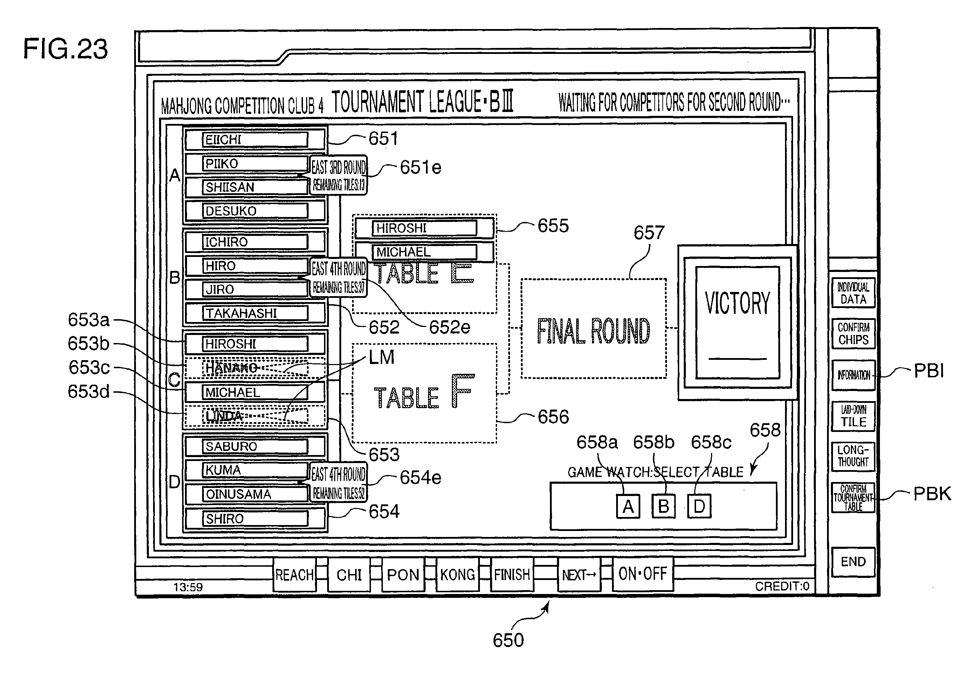

It should be noted that the present invention can also be embodied as follows.
(A) Although the competition game is a mahjong game in the description of this embodiment, it may be another competition game. For example, it may be a competition game without time limit, for which it is difficult to set a competition time due to the nature of the game, such as a Go game simulating Go, a *Shogi* game simulating Shogi, a chess game simulating chess, a card game simulating ordinary card playing, Japanese card playing, Japanese flower card playing, or a sports game simulating tennis, baseball, table tennis, volleyball or badminton.
(B) Although the tournament comprised of three rounds and made up of sixteen players is described in this embodiment, the tournament may have another form. For example, each competition game may be played by two players and the tournament may be comprised of four rounds and made up of sixteen players.
(C) Although all the three rounds constituting the tournament are comprised of competition games without time limit in this embodiment, at least one round may be comprised of competition games without time limit out of all the rounds excluding the final round. For example, out of three rounds constituting a tournament, a competition time may be set for the first round and competition games without time limit are set for the second and final rounds.
(D) Although the winner determining section 361c determines two winners from one combination in the description of the foregoing embodiment, it may determine one or three winners from one combination. For example, in the mahjong games of this embodiment, the number of the winner may be one in each combination of each round. In this case, the tournament is comprised of sixty four players and it becomes more difficult to win a victory, therefore making the tournament more interesting. Further, in this case, one competition of the next round can be started after competitions of four groups are finished. Therefore, the effect of shortening the competition waiting times of the players by the combination determining section 361d is increased and the effect of suppressing a drop in the interest by the game watch instructing section 361f is increased.
(E) Although the combinations of the second and succeeding rounds are determined independently of the combinations of the first round by the combination determining section 361d in the description of this embodiment, they may be determined beforehand based on the combinations of the first round. In this case, if the combination determining section 361d fits the winner determined by the winner determining section 361c in the combination set beforehand out of the combinations constituting the next round (e.g. second round), and the watching game selecting section 361g selects the competition game including the client terminal unit 1 as a competitor in the next round (e.g. second round) out of the competition games constituting the previous round (e.g. first round), the competition game including the client terminal unit 1 as a competitor in the next round can be watched.
(F) Although the watching game selecting section 361g selects one combination having the most advanced degree of progress evaluated by the degree of progress evaluating section 361h as the watching game in the description of this embodiment, one combination may be selected as a watching game in response to an operation signal from the client terminal unit 1. One example of a progress status displaying screen displayed on the client terminal unit 1 in this case is shown in FIG. 23.
   Similar to the progress status displaying screen 600 shown in FIG. 18, combination indicators 651 to 657 are displayed on a progress status displaying screen 650 shown in FIG. 23, four name indicators 651a to 651d, ..., 654a to 654d respectively displaying the names of four competitors are displayed in the combination indicators 651 to 654, and two name indicators 655a, 655b displaying the names of two competitors are displayed in the combination indicator 655. Further, the loser marks LM are displayed in the name indicators 625c, 625d and the like. In addition, degree of progress indicators 651e, 652e, 654e displaying degrees of progress of the competition games are respectively displayed at the right sides of the combination indicators 651, 652, 654.
   The progress status display screen 650 is displayed on the monitor 11 of the client terminal unit 1 operated by the player called "Hiroshi" (or "Michael") when this client terminal unit 1 finishes the competition of the first round (when the competition of the group C finishes).
   Further, a watching game selector 658 used to select a table (group) to be watched is displayed at the right bottom side of the progress status displaying screen 650. Table selection buttons 608a to 608c used to select the table to be watched from three tables (table A, table B, table D) of the first round are displayed in the watching game selector 658. Specifically, any of the table selection buttons 608a to 608c is depressed in the case of watching the table A, table B or table D. Since the combination (table) to be watched can be selected in this case, convenience can be further improved.
(G) Although the watching game selecting section 361g selects one combination as a watching game in the description of this embodiment, it may select a plurality of combinations as watching games. In this case, the competition statuses of a plurality of combinations may be so displayed on the client terminal unit 1 as to be simultaneously watchable or the combination to be displayed may be switched at intervals of a specified period among a plurality of combinations.
(H) Although the watching game selecting section 361g selects the combination having the most advanced degree of progress in the description of this embodiment, the combination may be selected in accordance with another rule. For example, a table including a player of the highest rank may be selected.
(I) Although the functional sections such as the game progress controlling section 161a are provided in the client terminal unit 1 in the description of this embodiment, they may be provided in the central server 3.
(J) Although the hand objects 631 displayed on the game watch screen 630 are displayed such that the types of the tiles cannot be distinguished (in the laid-down state) in the description of this embodiment, the hand object 631 of at least one player may be displayed such that the types of the tiles can be distinguished (e.g. in a standing state).
   In this case, it can be made more interesting to watch the game since one who is watching can know the types of the tiles. Further, since the playing habit of the competitor can be well found out if the types of the tiles of the competitor of the next round can be known, the competition in the next round can be to the advantage of the watching player.
(K) Although the winner determining section 361c determines two winners from one competition game in the description of this embodiment, the number of winners determined by the winner determining section 361c may be set for each round. In this case, it is preferable to increase the number of winners determined by the winner determining section 361c as the tournament advances. For example, one winner may be determined for the first round and two winners may be determined for the second round. As the tournament advances, the competition waiting times increase because of a decrease in the number of groups included in the tournament. However, in this case, increases in the competition waiting times can be suppressed.
(L) Although the long-thought button PBH can be used only once in the competition game of each round as described in the flow chart of FIG. 14 in this embodiment, it may be made usable a specified number of times (e.g. 10 times or without any limit) in the competition game of each round.

In this case (particularly in the case where there is no limit in the use of the long-thought button PBH), the player can confirm the progress status of the tournament by depressing the confirmation button PBK and can avoid the competition with an undesirable competitor by intentionally delaying the progress of the game by frequently depressing the long-thought button PBH, for example, in the case where the competition waiting terminal unit 1w for the next round is operated by the undesirable player. Thus, convenience can be further improved. In other words, the progress of the game can be adjusted by frequently depressing the long-though button PBH.

As described above, a game progress administration system according to the present invention is the one in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the system comprising winner determining means for determining a winner advancing to the next round based on a game result of the competition game of each combination every time the competition game of each combination constituting the one round finishes; combination determining means for fitting the winner determined by the winner determining means in one combination of the competition game constituting the next round; and competition starting means for instructing the start of the competition game of the next round to the game terminal units included in the combination if the one combination is filled up with the competitors as a result of the additional winner fitted in the one combination. It is preferable to further comprise game watch means for causing a game screen of an ongoing competition game constituting the one round to be displayed on a competition waiting terminal unit, which is a game terminal unit included in the one combination, until the one combination is filled up with the competitors after the winner is fitted in the one combination.

According to the above construction, the game watch means causes the game screen of the ongoing competition game constituting the one round to be displayed on the competition waiting terminal unit, which is the game terminal unit included in the one combination, until the one combination is filled up with the competitors after the winner is fitted in the one combination. The game terminal unit (competition waiting terminal unit) included in this combination is in a competition standby state until the one combination is filled up with the competitors after the winner is fitted in the one combination by the combination determining means. However, since the game screen of the ongoing competition game is displayed on this game terminal unit, the player operating this game terminal unit can watch the game, thereby suppressing a drop in the interest caused by the occurrence of the competition standby state.

It is preferable that watching game selecting means for selecting one competition game in accordance with a specified rule out of the ongoing competition games constituting the one round is further provided; and that the game watch means causes the game screen of the one competition game selected by the watching game selecting means to be displayed.

According to the above construction, out of the ongoing competition games constituting the one round, the one competition game is selected in accordance with the specified rule by the watching game selecting means, and the game screen of the one competition game selected by the watching game selecting means is displayed by the game watch means. Since the game screen of the one competition game selected in accordance with the specified rule is displayed, it is not necessary for the player to select the combination to be watched, thereby improving convenience.

It is also preferable that degree of progress evaluating means for evaluating the degree of progress of the competition game of each combination constituting each round is further provided; that the combination determining means preferentially fits the winner determined by the winner determining means in the combination, in which at least one winner is already fitted, out of the combinations constituting the next round; and that the watching game selecting means selects one combination having the most advanced degree of progress evaluated by the degree of progress evaluating means out of the combinations of the competition games constituting the one round.

According to the above construction, the degree of progress of the competition game of each combination constituting each round is evaluated by the degree of progress evaluating means, and the winner determined by the winner determining means is preferentially fitted in the combination, in which at least one winner is already fitted, out of the combinations constituting the next round by the combination determining means. Then, out of the combinations of the competition games constituting the one round, one combination having the most advanced degree of progress evaluated by the degree of progress evaluating means is selected by the watching game selecting means. Since the winner determined by the winner determining means is preferentially fitted in the combination, in which at least one winner is already fitted, out of the combinations constituting the next round, the combination can be quickly filled up with the competitors and the competition waiting times can be shortened. Further, since one combination having the most advanced degree of progress is selected and the game screen of the competition game of this combination is displayed on the competition waiting terminal unit, the player of the competition waiting terminal unit can watch the competition game of the combination including the competitor having a high possibility of competing with him in the next round, whereby convenience can be further improved.

Further, it is preferable that the competition game is the one comprised of a plurality of rounds simulating mahjong; and that the degree of progress evaluating means evaluates the degree of progress of the competition game based on a remaining round number, which is the number of rounds yet to be played, and a remaining drawable tile number, which is the number of drawable tiles remaining in a virtual pile.

According to the above construction, the competition game is the one comprised of a plurality of rounds simulating mahjong, and the degree of progress of the competition game is evaluated by the degree of progress evaluating means based on the remaining round number, which is the number of rounds yet to be played, and the remaining drawable tile number, which is the number of drawable tiles remaining in the virtual pile. Accordingly, the degree of progress of the competition game is evaluated based on the remaining round number and the remaining drawable tile number in the competition game comprised of a plurality of rounds simulating mahjong, wherefore the degree of progress of the competition game can be easily and accurately evaluated.

Further, the watching game selecting section preferably extracts the combination including the game terminal unit as a competitor in the next round out of the competition games constituting the one round and selects one combination in accordance with an operation signal from the competition waiting terminal unit from the extracted combinations if there are a plurality of extracted combinations.

According to the above construction, the watching game selecting section extracts the combination including the game terminal unit as the competitor in the next round out of the competition games constituting the one round and selects one combination in accordance with the operation signal from the competition waiting terminal unit from a plurality of extracted combinations if there are a plurality of extracted combinations. Since one combination is selected from a plurality of combinations including the game terminal units as the competitors in the next round in accordance with the operation signal from the competition waiting terminal unit, the player of the competition waiting terminal unit can select one combination to be watched, whereby convenience can be further improved. For example, it becomes possible to select the combination including the game terminal unit operated by the strongest player based on the past competition results out of a plurality of combinations including the game terminal units as the competitors in the next round.

Further, it is preferable that the combination determining means fits the winner determined by the winner determining means in the combination set beforehand out of the combinations constituting the next round; and that the watching game selecting section selects a combination including the game terminal unit as a competitor in the next round out of the competition games constituting the one round.

According to the above construction, the winner determined by the winner determining means is fitted in the combination set beforehand out of the combinations constituting the next round by the combination determining means, and the combination including the game terminal unit as the competitor in the next round is selected out of the competition games constituting the one round by the watching game selecting section. Accordingly, the combination including the game terminal unit as the competitor in the next round is selected and the game screen of the competition game of this combination is displayed on the competition waiting terminal unit. Therefore, the player of the competition waiting terminal unit can watch the competition game of the combination including the competitor in the next round and convenience can be further improved.

Further, it is preferable that the competition game is the one competed by a specified number of competitors equal to or more than three; and that the watching game selecting section extracts the combination including the game terminal unit as a competitor in the next round out of the competition games constituting the one round and selects one combination in accordance with an operation signal from the competition waiting terminal unit from the extracted combinations if there are a plurality of extracted combinations.

According to the above construction, the competition game is the one completed by the specified number of competitors equal to or more than three, and the watching game selecting section extracts the combination including the game terminal unit as the competitor in the next round out of the competition games constituting the one round and selects one combination in accordance with the operation signal from the competition waiting terminal unit from a plurality of extracted combinations if there are a plurality of extracted combinations. Accordingly, one combination is selected from a plurality of combinations including the game terminal units as the competitors in the next round in accordance with the operation signal from the competition waiting terminal unit. Thus, the player of the competition waiting terminal unit can select one combination to be watched, whereby convenience can be further improved. For example, it becomes possible to select the combination including the game terminal unit operated by the strongest player based on the past competition results out of a plurality of combinations including the game terminal units as the competitors in the next round.

A game progress administration method according to the present invention is the one using a game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the method comprising a step in which winner determining means of the game progress administration system determines a winner advancing to the next round based on a game result of the competition game of each combination every time the competition game of each combination constituting one round finishes; a step in which combination determining means of the game progress administration system fits the winner determined by the winner determining means in one combination of the competition game constituting the next round; a step in which competition starting means of the game progress administration system instructs the start of the competition game of the next round to the game terminal units included in the combination if the one combination is filled up with the competitors as a result of the additional winner fitted in the one combination; and a step in which game watch means of the game progress administration system causes a game screen of an ongoing competition game constituting the one round to be displayed on a competition waiting terminal unit, which is a game terminal unit included in the one combination, until the one combination is filled up with the competitors after the winner is fitted in the one combination.

According to this construction, the game screen of the ongoing competition game constituting the one round is caused to be displayed on a competition waiting terminal unit, which is the game terminal unit included in the one combination, by the game watch means of the game progress administration system until the one combination is filled up with the competitors after the winner is fitted in the one combination. The game terminal unit (competition waiting terminal unit) included in this combination is in a competition standby state until the one combination is filled up with the competitors after the winner is fitted in the one combination by the combination determining means. However, since the game screen of the ongoing competition game is displayed on this game terminal unit, the player operating this game terminal unit can watch the game, thereby suppressing a drop in the interest caused by the occurrence of the competition standby state.

Further, another game progress administration system according to the present invention is the one in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the system comprising winner determining means for determining a winner advancing to the next round based on a game result of the competition game of each combination every time the competition game of each combination constituting the one round finishes; combination determining means for fitting the winner determined by the winner determining means in one combination of the competition game constituting the next round; and competition starting means for instructing the start of the competition game of the next round to the game terminal units included in the combination if the one combination is filled up with the competitors as a result of the additional winner fitted in the one combination, wherein the combination determining means preferably fits the winner determined by the winner determining means preferentially in one combination, in which at least one winner is already fitted, out of the competition games constituting the next round and yet to be filled up with the competitors.

According to the above construction, the winner advancing to the next round is determined based on the game result of the competition game of each combination by the winner determining means every time the competition game of each combination constituting the one round for which the competition times of the respective competition games are indefinite finishes, and the winner determined by the winner determining means is preferentially fitted in the combination, in which at least one winner is already fitted, out of the competition games constituting the next round and yet to be filled up with the competitors by the combination determining means. If the one combination is filled up with the competitors as a result of the additional competitor fitted in the one combination, the start of the competition game of the next round is instructed to the game terminal units included in this combination. Since the winner determined by the winner determining means is preferentially fitted in one combination, in which at least one winner is already fitted, out of the combinations constituting the next round, the combination can be efficiently filled up with the competitors, thereby suppressing the occurrence of waiting times until the start of the next round.

It is preferable that the competition game is the one to be competed by a specified number of competitors equal to or more than three; and that the winner determining means determines a plurality of winners.

According to the above construction, the competition game is the one to be competed by the specified number of competitors equal to or more than three, and a plurality of winners are determined by the winner determining means. Accordingly, a plurality of winners are determined by the winner determining means even in the competition game competed by the specified number of competitors equal to or more than three, wherefore the combination can be efficiently filled up with the competitors, thereby further suppressing the occurrence of waiting times until the start of the next round. For example, if the competition game is competed by four competitors, it is necessary to determine four or more winners to start the competition of the next round. If two winners are determined in one competition, the competition of the next round can be started when the winners of two combinations of the previous round (four = 2 (combinations) x 2 (winners/combination)) are determined.

Further, it is preferable that the competition game is a game simulating mahjong in which four competitors compete with each other; and that the winner determining means determines two winners.

According to the above construction, the competition game is a game simulating mahjong in which four competitors compete with each other, and the two winners are determined by the winner determining means. Since the two winners are determined by the winner determining means even in the mahjong game competed by the four competitors, the combination can be efficiently filled up with the competitors, thereby further suppressing the occurrence of waiting times until the start of the next round. Further, since the winner is preferentially fitted in the combination which constitutes the next round and in which the winner is already fitted, one competition game of the next round can be started every time the winners of the two competition games are determined by the winner determining means. Therefore, the competition starting means needs not judge whether or not the combination has been filled up with the competitors and the process can be simplified.

It is preferable to comprise game watch means for causing a game screen of an ongoing competition game constituting the one round to be displayed on a competition waiting terminal unit, which is a game terminal unit included in the one combination, until the one combination is filled up with the competitors after the winner is fitted in the one combination by the combination determining means.

According to the above construction, the game screen of the ongoing competition game constituting the one round is displayed on the competition waiting terminal unit, which is the game terminal unit included in the one combination, until the one combination is filled up with the competitors after the winner is fitted in the one combination by the combination determining means. The game terminal unit (competition waiting terminal unit) included in this combination is in a competition standby state until the one combination is filled up with the competitors after the winner is fitted in the one combination by the combination determining means. However, since the game screen of the ongoing competition game is displayed on this game terminal unit, the player operating this game terminal unit can watch the game, thereby suppressing a drop in the interest caused by the occurrence of the competition standby state. Since the competition game to be watched is the ongoing competition game constituting the round (one round) in which the watching player became a winner, the watching player can grasp the gaming habit of the competitor in the next round if the competitor in the next round is included in the competitors of this competition game and a drop in the interest in the competition game caused by the occurrence of a waiting time can be further suppressed.

It is preferable that watching game selecting means for selecting one competition game in accordance with a specified. rule out of the ongoing competition games constituting the one round is further provided; and that the game watch means causes the game screen of the one competition game selected by the watching game selecting means to be displayed.

According to the above construction, out of the ongoing competition games constituting the one round, the one competition game is selected in accordance with the specified rule by the watching game selecting means, and the game screen of the one competition game selected by the watching game selecting means is displayed by the game watch means. Since the game screen of the one competition game selected in accordance with the specified rule is displayed, it is not necessary for the player to select the combination to be watched, thereby improving convenience.

Another game progress administration method according to the present invention is the one using a game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the method comprising a step in which winner determining means of the game progress administration system determines a winner advancing to the next round based on a game result of the competition game of each combination every time the competition game of each combination constituting one round finishes; a step in which combination determining means of the game progress administration system preferentially fits the winner determined by the winner determining means in one combination, in which at least one winner is already fitted, out of the combinations constituting the next round and yet to be filled up with the competitors; and a step in which competition starting means of the game progress administration system instructs the start of the competition game of the next round to the game terminal units included in the combination if the one combination is filled up with the competitors as a result of the additional winner fitted in the one combination.

According to this construction, the winner determined by the winner determining means is fitted in one combination which constitutes the next round and in which at least one winner is already fitted in. Thus, the combination can be efficiently filled up with the competitors and the occurrence of waiting times until the start of the next round can be suppressed.

It should be noted that what are written as means for fulfilling certain functions in the specification of the present application are not limited to the constructions written in this specification to fulfill these functions, and also embrace other constructions such as units and portions for fulfilling these functions.

### INDUSTRIAL APPLICABILITY

According to the game progress method and system of the present invention, in the progresses of tournament competition games having indefinite competition times, a winner advancing to the next round can be determined based on a game result of the competition game of each combination every time the competition game of each combination constituting one round for which the competition times of the respective competition games are set indefinite, the determined winner can be fitted in one combination of the competition game constituting the next round, and the start of the competition game of the next round can be instructed to game terminal units included in the combination if the one combination is filled up with the competitors as a result of the additional winner fitted in the one combination.

## Claims

1. A game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the system comprising:
winner determining means for determining a winner advancing to the next round based on a game result of the competition game of each combination every time the competition game of each combination constituting the one round finishes;
combination determining means for fitting the winner determined by the winner determining means in one combination of the competition game constituting the next round; and
competition starting means for instructing the start of the competition game of the next round to the game terminal units included in the combination if the one combination is filled up with the competitors as a result of the additional winner fitted in the one combination.

2. A game progress administration system according to claim 1, further comprising game watch means for causing a game screen of an ongoing competition game constituting the one round to be displayed on a competition waiting terminal unit, which is a game terminal unit included in the one combination, until the one combination is filled up with the competitors after the winner is fitted in the one combination.

3. A game progress administration system according to claim 2, further comprising watching game selecting means for selecting one competition game in accordance with a specified rule out of the ongoing competition games constituting the one round, wherein:
the game watch means causes the game screen of the one competition game selected by the watching game selecting means to be displayed.

4. A game progress administration system according to claim 3, further comprising degree of progress evaluating means for evaluating the degree of progress of the competition game of each combination constituting each round, wherein:
the combination determining means preferentially fits the winner determined by the winner determining means in the combination, in which at least one winner is already fitted, out of the combinations constituting the next round; and
the watching game selecting means selects one combination having the most advanced degree of progress evaluated by the degree of progress evaluating means out of the combinations of the competition games constituting the one round.

5. A game progress administration system according to claim 4, wherein:
the competition game is the one comprised of a plurality of rounds simulating mahjong; and
the degree of progress evaluating means evaluates the degree of progress of the competition game based on a remaining round number, which is the number of rounds yet to be played, and a remaining drawable tile number, which is the number of drawable tiles remaining in a virtual pile.

6. A game progress administration system according to claim 3, wherein the watching game selecting section extracts the combination including the game terminal unit as a competitor in the next round out of the competition games constituting the one round and selects one combination in accordance with an operation signal from the competition waiting terminal unit from the extracted combinations if there are a plurality of extracted combinations.

7. A game progress administration system according to claim 3, wherein:
the combination determining means fits the winner determined by the winner determining means in the combination set beforehand out of the combinations constituting the next round; and
the watching game selecting section selects a combination including the game terminal unit as a competitor in the next round out of the competition games constituting the one round.

8. A game progress administration system according to claim 7, wherein:
the competition game is the one competed by a specified number of competitors equal to or more than three; and
the watching game selecting section extracts the combination including the game terminal unit as a competitor in the next round out of the competition games constituting the one round and selects one combination in accordance with an operation signal from the competition waiting terminal unit from the extracted combinations if there are a plurality of extracted combinations.

9. A game progress administration method using a game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the method comprising:
a step in which winner determining means of the game progress administration system determines a winner advancing to the next round based on a game result of the competition game of each combination every time the competition game of each combination constituting one round finishes;
a step in which combination determining means of the game progress administration system fits the winner determined by the winner determining means in one combination constituting the next round;
a step in which competition starting means of the game progress administration system instructs the start of the competition game of the next round to the game terminal units included in the one combination if the one combination is filled up with the competitors as a result of the additional winner fitted in the one combination; and
a step in which game watch means of the game progress administration system causes a game screen of an ongoing competition game constituting the one round to be displayed on a competition waiting terminal unit, which is the game terminal unit included in the one combination, until the one combination is filled up with the competitors after the winner is fitted in the one combination.

10. A game progress administration system according to claim 1, wherein the combination determining means fits the winner determined by the winner determining means preferentially in one combination, in which at least one winner is already fitted, out of the combinations constituting the next round and yet to be filled up with the competitors.

11. A game progress administration system according to claim 10, wherein the competition game is the one competed by a specified number of competitors equal to or more than three, and the winner determining means determines a plurality of winners.

12. A game progress administration system according to claim 11, wherein:
the competition game is a game simulating mahjong in which four competitors compete, and
the winner determining means determines two winners.

13. A game progress administration system according to any one of claims 10 to 12, further comprising game watch means for causing a game screen of an ongoing competition game constituting the one round to be displayed on a competition waiting terminal unit, which is a game terminal unit included in the one combination, until the one combination is filled up with the competitors after the winner is fitted in the one combination by the combination determining means.

14. A game progress administration system according to claim 13, further comprising watching game selecting means for selecting one competition game in accordance with a specified rule out of the ongoing competition games constituting the one round is further provided; wherein:
the game watch means causes the game screen of the one competition game selected by the watching game selecting means to be displayed.

15. A game progress administration method using a game progress administration system in which a plurality of game terminal units to be operated by players and displaying game screens are so connected via communication lines as to be able to communicate operation signals necessary for the progresses of games, thereby administering the progresses of games in a tournament made up of a plurality of rounds in which competition games of a specified number of combinations are set and having indefinite competition times set for the respective competition games at least in one round, the method comprising:
a step in which winner determining means of the game progress administration system determines a winner advancing to the next round based on a game result of the competition game of each combination every time the competition game of each combination constituting one round finishes;
a step in which combination determining means of the game progress administration system fits the winner determined by the winner determining means preferentially in one combination, in which at least one winner is already fitted, out of the combinations constituting the next round and yet to be filled up with the competitors; and
a step in which competition starting means of the game progress administration system instructs the start of the competition game of the next round to the game terminal units included in the combination if the one combination is filled up with the competitors as a result of the additional winner fitted in the one combination.
